# EUROPÄISCHE PATENTANMELDUNG

(11) **EP 2 983 259 A1**
(43) Veröffentlichungstag der Anmeldung: **10.02.2016**
(21) Anmeldenummer: 15180107.3
(22) Anmeldetag: 07.08.2015
(51) Int. Cl.: H02G 1/02

(54) **KABELANLAGENINSPEKTIONSFAHRZEUG UND KABELANLAGENINSPEKTIONSVERFAHREN**

(30) Priorität: 08.08.2014 CH 12092014
(71) Anmelder: Langenegger, David, 8427 Rorbas (CH)
(72) Erfinder: Langenegger, David, 8427 Rorbas (CH)
(74) Vertreter: Frei Patent Attorneys

(57) **Zusammenfassung**

Kabelfahrzeug (1) zur Inspektion von Kabelanlagen (20), welche eine Mehrzahl von in einer gemeinsamen Richtung zwischen Masten (22.1, 22.2) verlaufenden Kabeln (21.1-21.7) aufweisen, umfassend einen Kabelfahrmechanismus zum angetriebenen Fahren des Kabelfahrzeugs (1) auf mindestens einem Kabel (21.1-21.7) der Kabelanlage (20), einen Flugmechanismus zum Fliegen des Kabelfahrzeugs (1) und eine Inspektionsvorrichtung zur Inspektion der Kabelanlage (20). Der Flugmechanismus ist derart ausgerüstet, dass das Kabelfahrzeug (1) durch Fliegen auf das mindestens eine Kabel (21.1-21.7) positionierbar ist. Die Inspektionsvorrichtung ist zur gleichzeitigen Inspektion mehrerer voneinander beabstandeten Kabel (21.1-21.7) der Kabelanlage (20) während des angetriebenen Fahrens auf dem mindestens einen Kabel (21.1-21.7) ausgerüstet. Der Kabelfahrmechanismus kann zum angetriebenen Fahren des Kabelfahrzeugs (1) auf genau einem Kabel (21.1-21.7) der Kabelanlage (20) ausgerüstet sein. Optional ist die Inspektionsvorrichtung zur Inspektion einer Sicherheitsumgebung der Kabelanlage (20) ausgerüstet. Betrifft auch ein Verfahren zur Inspektion der Kabelanlage (20) mit einem Kabelfahrzeug (1) gemäss obiger Beschreibung.

## Beschreibung

Die Erfindung bezieht sich auf das Gebiet von Kabelanlageninspektionsvorrichtungen und Kabelanlageninspektionsverfahren, wobei die inspizierten Kabelanlagen eine Mehrzahl von in einer gemeinsamen Richtung zwischen Masten verlaufenden Kabeln aufweisen. Die Erfindung bezieht sich auf ein Kabelfahrzeug und auf ein Verfahren.

Kabelanlagen wie beispielsweise Hochspannungsleitungen bedürfen einer regelmässigen Inspektion. Eine Inspektion bedeutet dabei eine Untersuchung. Dies trifft insbesondere auf sogenannte Freileitungen bzw. Hochspannungsfreileitungen zu, also auf eine Mehrzahl von oberirdischen und freistehenden auf Masten montierten Hochspannungskabeln.

Solche Inspektionen sind bei Kabelanlagen arbeitsintensiv, zeitaufwendig, kostenintensiv und/oder schwierig durchzuführen. Dies gilt insbesondere für Kabelanlagen, welche durch unwegsames Gebiet führen, etwa durch ein Gebiet mit viel Vegetation und/oder unregelmässiger Bodenbeschaffenheit bzw. unregelmässigem Bodenverlauf. Derzeitiger Stand der Technik ist immer noch, dass Kabelanlagen zu einem grossen Teil manuell durch Fachkräfte inspiziert werden. Dies erfolgt typischerweise dadurch, dass die Fachkräfte die Kabelanlage persönlich abschreiten, abfahren und/oder abfliegen und dabei visuell inspizieren, entweder mit blossem Auge und/oder mit einem Hilfsinstrument wie etwa einem Fernglas. Gerade bei weitläufigen Kabelanlagen sind diese Inspektionen besonders zeitaufwendig und sehr kostenintensiv.

Um diese Inspektionen von Kabelanlagen effizienter durchführen zu können, sind aus dem derzeitigen Stand der Technik verschiedene Ansätze bekannt. Es wurden bereits verschiedene spezifische Hilfsmittel und Vorrichtungen vorgeschlagen, um die Inspektion zu vereinfachen, zu beschleunigen und/oder kostengünstiger ausführen zu können. Eine häufig verwendete Vorrichtung ist ein Fahrzeug, welches auf den zu inspizierenden Kabeln fahren kann. Dies hat aber den Nachteil, dass bei Hindernissen wie etwa Masten, Isolatoren, Verzweigungen und dergleichen das Fahrzeug diese Hindernisse überwinden muss.

Das Überwinden der Hindernisse kann dabei auf verschiedene Arten bewerkstelligt werden, beispielsweise durch manuelles Umpositionieren des Fahrzeugs durch die Fachkraft. Dies ist aber immer noch arbeitsintensiv, zeitaufwendig, kostenintensiv und/oder schwierig durchzuführen. Oder das Fahrzeug überwindet das Hindernis selber mit einem am Fahrzeug ausgebildeten Kletter-, Überbrückungs- und/oder Umsetzmechanismus. Dies hat aber den Nachteil, dass entsprechende Fahrzeuge eine aufwendige Konstruktion aufweisen, teuer sind und meistens nur Hindernisse bestimmten Typs und begrenzten Ausmasses überwinden können.

Im Stand der Technik sind auch Inspektionsvorrichtungen erwähnt, welche als ferngesteuerte Fluggeräte ausgebildet sind. Insbesondere sind Multikopter mit Inspektionsvorrichtungen beschrieben, welche die Kabelanlage abfliegen und mit einer Kamera Bilder erstellen. Diese Bilder werden für eine Analyse durch die Fachkraft an entsprechende Vorrichtungen gesendet und/oder im Multikopter selber gespeichert. Solche Multikopter haben den Nachteil einer kurzen Flugzeit von typischerweise wenigen Minuten. Inspektionen von längeren Abschnitten einer Kabelanlage sind daher mit vielen Zwischenlandungen und Unterbrüchen verbunden und bedingen bei elektrischem Betrieb des Multikopters viele geladene wechselbare Akkus. Eine Steigerung der Effizienz im Vergleich zur manuellen Inspektion durch die Fachkraft ist daher gering. Ein anderes Problem solcher Multikopter kann beispielsweise eine kleine operative Reichweite aufgrund der Fernsteuerung sein.

Auch eine bestimmte Kombination zweier oben beschriebener Ansätze ist bereits schon bekannt. In WO 2004 102 757 ist eine Kabelinspektionsvorrichtung beschrieben, welche auf mehreren horizontal angeordneten Kabeln fährt und eine durch die Kabel der Kabelanlage mit Energie geladene Flugvorrichtung aufweist. Unter Zuhilfenahme der Flugvorrichtung können Hindernisse der Kabelanlage überwunden werden. Der Nachteil der beschränkten Flugzeit der Kabelinspektionsvorrichtung wird umgangen, indem Energiespeicher der Flugvorrichtung direkt von der Kabelanlage aufgeladen werden. Jedes der horizontal angeordneten Kabel wird durch jeweils eine separate Kamera inspiziert, wobei diese Kamera auch einer Detektion von Hindernissen dient.

Diese Kabelinspektionsvorrichtung hat jedoch mehrere Nachteile. Beispielsweise ist diese Kabelinspektionsvorrichtung nur auf horizontal angeordneten Kabeln anwendbar. Typische Kabelanlagen und insbesondere Hochspannungsleiter weisen aber keine horizontal angeordneten Kabel auf, sondern Kabel mit unterschiedlichem Abstand zum Boden (also auf unterschiedlichen Höhen). Diese Anordnung erlaubt ein Maximieren der gegenseitigen Abstände bei gleichzeitig möglichst kompakter Bauweise, verhindert aber gleichzeitig die Verwendung der beschriebenen Kabelinspektionsvorrichtung. Es ist jedoch nicht möglich, die Kabelinspektionsvorrichtung gemäss WO 2004 102 757 auf einer weiter unten liegenden Kabelebene fahren zulassen, da ein Landen so gar nicht möglich wäre. Auch ist die benötigte Stromabnehmermechanik mechanisch aufwendig, technisch kompliziert und sicherheitstechnisch nicht unproblematisch. Zudem verfügt die Stromabnehmermechanik über Schleifkontakte, welche die zu inspizierenden Kabel mechanisch beeinflussen können.

Es sind auch andere Kombinationen von Flug- und Fahrvorrichtung bekannt. Beispielsweise sind Kabelinspektions- respektive Kabelpatrollierungsgeräte beschrieben, bei denen die Fahrvorrichtung in Fahrposition oberhalb der Flugvorrichtung angeordnet und die Fahrvorrichtung mit seiner Kabelaufnahme von der Flugvorrichtung aus hakenförmig (bzw. wie ein auf dem Kopf stehendes L) gegen oben ausgebildet ist. Diese Anordnung hat den Nachteil, dass das Kabelinspektionsgerät neben das Kabel und danach mit einem oder mehreren Rotoren der Flugvorrichtung gar unter das Kabel fliegen muss, damit die Fahrvorrichtung auf das Kabel aufsetzen kann. Dies birgt die Gefahr einer Berührung zwischen Flugvorrichtung und Kabel, was zum Absturz des Kabelinspektionsgeräts führen kann. Auch entsteht die Gefahr einer Berührung zwischen der Flugvorrichtung und einem weiter unten liegenden Kabel der Kabelanlage.

Es sind beispielsweise auch Kabelinspektionsgeräte mit Kombinationen von Flug- und Fahrvorrichtung beschrieben, bei welchen die Fahrvorrichtung in Fahrposition unterhalb der Flugvorrichtung angeordnet ist. Ein solches Kabelinspektionsgerät hat den Nachteil, dass ein Schwerpunkt des Kabelinspektionsgeräts weit oben liegt. Wird beim Kabelinspektionsgerät in Fahrposition die Flugvorrichtung ausgeschaltet, sodass beispielsweise Rotoren der Flugvorrichtung keinen Auftrieb mehr erzeugen, besteht die Gefahr eines Verkippens. Falls die Fahrvorrichtung zudem nur eine einzige Rolle beinhaltet, erhöht sich die Gefahr eines Verdrehens während des Fahrens auf dem Kabel.

Kabelinspektionsgeräte ohne Flugvorrichtung haben den Nachteil, dass das Kabelinspektionsgerät nicht fliegend auf das Kabel aufsetzen kann, sondern beispielsweise mit einem Kran, einer Hebebühne, oder durch Hinaufklettern eines Menschen auf einen Mast, auf das Kabel gesetzt werden muss. Dies bedingt üblicherweise die Abschaltung und Erdung der gesamten Kabelanlage, was mit zusätzlichen Kosten verbunden ist. Auch ist ein solches Kabelinspektionsgerät häufig für eine ganz bestimmte Bauart einer Kabelanlage konstruiert und auf eine Verwendung mit dieser bestimmten Bauart eingeschränkt, um die Masten fahrend überqueren zu können.

Die Begriffe oben und unten beziehen sich im vorliegenden Schriftstück wo nicht ausdrücklich anders bezeichnet auf die Schwerkraftrichtung: oben bedeutet in Schwerkraftrichtung flussaufwärts, unten in Schwerkraftrichtung flussabwärts. Bei relativen Angaben ist auch ein Versatz unter diesem Begriff mit eingeschlossen, d.h. ist ein erster Punkt im Vergleich zu einem zweiten Punkt unten angeordnet, so kann der erste Punkt auch neben einer durch den zweiten Punkt verlaufenden Gerade in Gravitationsrichtung positioniert sein. Solange der erste Punkt in einem unteren Halbraum positioniert ist, liegt der erste Punkt im Vergleich zum zweiten Punkt unten. Der untere Halbraum ist durch eine Grenzebene senkrecht zur Gravitationsrichtung und durch den zweiten Punkt verlaufend begrenzt und liegt in Gravitationsrichtung flussabwärts. Für die Begriffe ober, unter, oberhalb und unterhalb gilt analog dasselbe.

Es ist deshalb Aufgabe der Erfindung, eine Kabelanlageninspektionsvorrichtung der eingangs genannten Art zu schaffen, welche mindestens einer der oben genannten Nachteile mindestens teilweise behebt.

Diese Aufgabe löst ein Kabelfahrzeug mit den Merkmalen des Patentanspruches 1.

Das erfindungsgemässe Kabelfahrzeug zur Inspektion von Kabelanlagen, welche eine Mehrzahl von in einer gemeinsamen Richtung zwischen Masten verlaufenden Kabeln aufweisen, umfasst:
- einen Kabelfahrmechanismus zum angetriebenen Fahren des Kabelfahrzeugs auf mindestens einem Kabel der Kabelanlage,
- einen Flugmechanismus zum Fliegen des Kabelfahrzeugs und
- eine Inspektionsvorrichtung zur Inspektion der Kabelanlage.

Zudem ist der Flugmechanismus derart ausgerüstet, dass das Kabelfahrzeug durch Fliegen auf das mindestens eine Kabel der Kabelanlage positionierbar ist. Ausserdem ist die Inspektionsvorrichtung zur gleichzeitigen Inspektion mehrerer voneinander beabstandeter Kabel der Kabelanlage während des angetriebenen Fahrens auf dem mindestens einen Kabel ausgerüstet.

Ein Kabelfahrzeug bezeichnet dabei eine Vorrichtung, welche dazu ausgerüstet ist, durch Antrieb einer auf dem Kabel/auf einem der Kabel rollenden Rolle diesem Kabel entlang zu fahren. Das Kabelfahrzeug kann weitere, passive und/oder aktive auf dem Kabel/auf einem der Kabel rollende Rollen aufweisen.

Eine Rolle kann eine mit dem Kabel in Kontaktschluss tretende Lauffläche mit an das Kabel angepasstem Haftreibungskoeffizient aufweisen. Die Lauffläche erlaubt dadurch ein rutschfestes Fahren auf dem Kabel. Beispielsweise können in grossen Stückzahlen für andere Zwecke hergestellte und daher kostengünstige Laufrollen (z.B. von Koffern oder von Inline-Rollschuhen) als Rollen verwendet werden. Insbesondere können Rollen mit radial nach aussen gewölbten (z.B. konkaven) und/oder geraden Laufflächen sandwichartig zwischen zwei Randscheiben angeordnet sein, wobei die Randscheiben radial über die Laufflächen hinaus stehen. Die Randscheiben bilden somit beidseitig der Lauffläche einen Rand aus, welcher ein Wegrutschen des Kabels in Richtung einer Rotationsachse der Rolle zu verhindern imstande ist. Alternativ können solche Ränder auch an der Lauffläche ausgebildet sein. Die Laufflächen können beispielsweise konvex ausgebildet sein.

Eine Kabelanlage kann beispielsweise eine Hochspannungsleitung sein, und insbesondere eine Freileitung. Eine Kabelanlage kann aber auch eine Konstruktion für eine Seilbahn, einen Lift, eine Brücke und dergleichen sein.

Die Inspektion der Kabelanlage kann einer Erkennung und insbesondere einer Früherkennung von Schäden an den Kabeln dienen.

Mit Früherkennung von Schäden ist eine Erkennung von potentiellen Schäden gemeint. Die Früherkennung erlaubt eine Erkennung von Gefahrenstellen, welche zu Schäden führen können.

Die Inspektion der Kabelanlage kann einer Erkennung und insbesondere einer Früherkennung von Schäden an von den Kabeln verschiedenen Teilen der Kabelanlagen dienen. Beispielsweise kann die Inspektion der Erkennung und insbesondere der Früherkennung von Schäden an den Masten, an Aufhängungsvorrichtungen der Kabel und/oder an Isolationskörpern dienen.

Die Inspektion der Kabelanlage kann einer Erkennung und insbesondere einer Früherkennung von Gefahrenstellen für die Kabelanlage in einer Umgebung der Kabelanlage dienen. In einer Umgebung der Kabelanlage befindliche Gefahrenstellen umfassen beispielsweise Objekte oder Teile von Objekten, welche zu Schäden der Kabelanlage führen können. Schäden an der Kabelanlage können entstehen, wenn Objekte oder Teile von Objekten einen minimalen Sicherheitsabstand zur Kabelanlage bzw. zu Teilen der Kabelanlage unterschreiten. Das Unterschreiten des minimalen Sicherheitsabstands kann zu Funkenschlag, Lichtbögen und/oder Kurzschluss und insbesondere zu entsprechenden Folgeschäden führen und muss daher vermieden werden.

Die Umgebung der Kabelanlage kann beispielsweise inspiziert werden, um Äste, andere Vegetationsteile oder Gegenstände ausfindig zu machen, welche einen minimalen Sicherheitsabstand zu den Kabeln unterschreiten. Diese Objekte oder Gegenstände können am Boden angeordnet sein. Sie können auch über den Boden hinausragen wie etwa Bäume, Sträucher, andere Vegetationsteile oder andere grosse Objekte wie etwa Felsen von einem Steinschlag, Erdrutsch oder einer Überschwemmung.

Insbesondere kann die Inspektion der Kabelanlage gleichzeitig sowohl die Kabel, die von den Kabeln verschiedenen Teile der Kabelanlage als auch die Umgebung betreffen.

Der Kabelfahrmechanismus ist derart ausgerüstet, dass das Kabelfahrzeug damit aus eigener Kraft fahren kann. Der Kabelfahrmechanismus erlaubt ein energieeffizientes Fortbewegen des Kabelfahrzeugs entlang des mindestens einen Kabels.

Der Flugmechanismus ist derart ausgerüstet, dass das Kabelfahrzeug damit aus eigener Kraft fliegen kann. Der Flugmechanismus erlaubt ein Überwinden von Hindernissen, also von Stellen der Kabelanlage, an welchen das Kabelfahrzeug dem mindestens einen Kabel nicht entlangfahren kann. Da das Kabelfahrzeug vor und nach dem Hindernis energieeffizient durch Fahren bewegt wird, wirkt sich der Nachteil der kurzen Flugzeit nur noch bedeutend weniger stark auf eine Einsatzdauer des Kabelfahrzeugs aus.

Durch die beschriebene Kombination von Kabelfahrmechanismus und Flugmechanismus kann einerseits das Kabelfahrzeug effizient fortbewegt werden und gleichzeitig Hindernisse überwinden, und andererseits bleibt der konstruktive Aufbau des Kabelfahrzeugs verhältnismässig einfach und unkompliziert. Dies wirkt sich beispielsweise in tiefen Kosten, kleinem Verschleiss und einfacher und rascher Wartung und Reparatur aus.

Die Inspektionsvorrichtung ist dazu ausgerüstet, mehrere voneinander beabstandete Kabel der Kabelanlage während des angetriebenen Fahrens auf dem mindestens einen Kabel gleichzeitig zu inspizieren. Dies erlaubt eine rasche und effiziente Inspektion eines grossen Teils der Kabelanlage.

Die Inspektionsvorrichtung kann dazu ausgerüstet sein, die Kabelanlage auch während Zeitabschnitten ausserhalb des angetriebenen Fahrens auf dem mindestens einen Kabel zu inspizieren. Insbesondere kann diese Inspektion der Kabelanlage während des Fliegens stattfinden. Dabei kann das Kabelfahrzeug insbesondere dazu ausgerüstet sein, Informationen der Inspektionsvorrichtung aus Phasen des angetriebenen Fahrens mit Informationen aus Phasen des Fliegens in räumlichen Zusammenhang zu stellen.

Weitere bevorzugte Ausführungsformen gehen aus den abhängigen Patentansprüchen hervor.

Das Kabelfahrzeug kann derart ausgebildet sein, dass in Fahrposition der Flugmechanismus oberhalb einer obersten Kabelposition des Kabelfahrmechanismus angeordnet ist. Insbesondere sind in Fahrposition alle Rotoren des Flugmechanismus oberhalb einer obersten Kabelposition des Kabelfahrmechanismus angeordnet.

Mit Kabelposition ist ein Raum gemeint, welcher in Fahrposition von einem Abschnitt eines Kabels eingenommen wird, der vom Kabelfahrmechanismus des Kabelfahrzeugs befahren wird.

Ein Raum bezeichnet ein räumliches Volumen, also eine in Länge, Breite, Höhe eingegrenzte Ausdehnung. Ein Raum kann in seiner Ausdehnung durch physische und/oder gedachte bzw. virtuelle Grenzen eingegrenzt sein.

Das Kabelfahrzeug kann derart ausgebildet sein, dass in Fahrposition vom Kabelfahrmechanismus nach unten ein Kabelzugang ausgebildet ist.

Ein Kabelzugang ist ein Raum, welcher zwei parallel angeordnete und voneinander beabstandete Halbebenen und den Raum dazwischen umfasst. Dabei ist der Kabelzugang frei von Teilen des Kabelfahrzeugs ausgebildet. Die beiden Halbebenen sind mindestens eine Dicke eines vom Kabelfahrmechanismus des Kabelfahrzeugs zu befahrenden Kabels voneinander beabstandet und sind in Normalprojektion (senkrecht zu den Halbebenen betrachtet) deckungsgleich angeordnet. Der Kabelzugang schliesst unmittelbar an die Kabelposition an und kann insbesondere die Kabelposition umfassen.

In einer optionalen Ausführungsform ist das Kabelfahrzeug derart ausgebildet, dass ein Schwerpunkt des Kabelfahrzeugs beim Fahren des Kabelfahrzeugs auf dem mindestens einen Kabel der Kabelanlage unterhalb eines im Bereich des Kabelfahrmechanismus liegenden Abschnitts des mindestens einen Kabels angeordnet ist. Insbesondere liegt der Schwerpunkt des Kabelfahrzeugs auf einer von dem mindestens einen Kabel ausgehenden und in Richtung der Gravitationsrichtung verlaufenden Halbgeraden. Beispielsweise kann vorgesehen sein, dass ein Energiespeicher (Akkupack oder dergleichen) oder mehrere Energiespeicher unterhalb von auf dem Kabel fahrenden Rollen angeordnet sind.

Optional ist der Kabelfahrmechanismus zum angetriebenen Fahren des Kabelfahrzeugs auf genau einem Kabel der Kabelanlage ausgerüstet.

Das Fahren auf genau einem Kabel der Kabelanlage erlaubt es, aus den mehreren Kabeln der Kabelanlage ein einzelnes Kabel frei zu wählen. Insbesondere ist ein am höchsten gelegenes Kabel (also ein in Schwerkraftrichtung am weitesten flussaufwärts gelegenes Kabel) geeignet, um mit dem Kabelfahrzeug die Kabelanlage zu inspizieren. Das am höchsten gelegene Kabel erlaubt eine gute Übersicht über die Kabelanlage. Das am höchsten gelegene Kabel kann einfach und unkompliziert angeflogen werden.

Ein auf genau einem Kabel fahrendes Kabelfahrzeug ist einfach zu positionieren. Ein auf genau einem Kabel fahrendes Kabelfahrzeug weist eine einfache Konstruktion auf und ist frei von einer Einschränkung auf Kabelanlagen mit vorgegebenem Kabelabstand. Eine gegebenenfalls notwendige Anpassungsmöglichkeit an verschiedene Kabelabstände ist überflüssig, wenn das Kabelfahrzeug genau einem Kabel entlang fährt.

Alternativ ist es aber auch möglich, dass der Kabelfahrmechanismus zum angetriebenen Fahren des Kabelfahrzeugs auf zwei oder mehr Kabeln der Kabelanlage ausgerüstet ist.

Als weiteres optionales Merkmal ist die Inspektionsvorrichtung zur Inspektion einer Sicherheitsumgebung der Kabelanlage ausgerüstet.

Unter Sicherheitsumgebung der Kabelanlage ist ein dreidimensionaler Raum zu verstehen, in welchem Teile der Kabelanlage höchstens in einer Distanz von einer Schlagweite der Kabelanlage entfernt angeordnet sind.

Unter Schlagweite ist eine Reichweite eines Funkenschlags zu verstehen. Mit anderen Worten entspricht die Schlagweite der Entfernung, in welcher eine Funkenentladung d.h. ein Funkenschlag möglich ist. Die Reichweite eines Funkenschlags der Kabelanlage ist abhängig von vielen Faktoren wie etwa Spannungsunterschiede zwischen Teilen der Kabelanlage und ihrer Umgebung, Luftfeuchtigkeit, Luftdruck und räumliche Form der Teile der Kabelanlage (z.B. durch einen sogenannten Spitzeneffekt, auch als Spitzenwirkung bezeichnet). Unter Normalbedingungen entspricht die Schlagweite für ein Kabel einer typischen Hochspannungsleitung mit 380 kV an der Luft etwa 2.7 Meter.

Es ist auch möglich, dass die Inspektionsvorrichtung zur Inspektion einer erweiterten Sicherheitsumgebung der Kabelanlage ausgerüstet ist.

Mit erweiterter Sicherheitsumgebung kann ein dreidimensionaler Raum gemeint sein, in welchem Teile der Kabelanlage höchstens in einer Distanz von fünf mal der Schlagweite der Kabelanlage entfernt angeordnet sind, insbesondere höchstens in einer Distanz von drei mal der Schlagweite und insbesondere höchstens in einer Distanz von zwei mal der Schlagweite.

Es kann mit erweiterter Sicherheitsumgebung auch ein dreidimensionaler Raum gemeint sein, welcher durch eine absolute Distanz zu den Kabeln der Kabelanlage festgelegt ist. Die erweiterte Sicherheitsumgebung kann beispielsweise durch einen Abstand vom maximal 15m zu einem Kabel der Kabelanlage bestimmt sein. Insbesondere kann die erweiterte Sicherheitsumgebung beispielsweise durch einen Abstand vom maximal 10m zu einem Kabel der Kabelanlage bestimmt sein. Insbesondere kann die erweiterte Sicherheitsumgebung beispielsweise durch einen Abstand vom maximal 5m zu einem Kabel der Kabelanlage bestimmt sein.

Die Inspektion der Sicherheitsumgebung und/oder der erweiterten Sicherheitsumgebung der Kabelanlage erlaubt eine Kontrolle der Sicherheit der Kabelanlage. Sowohl akute Gefahren durch Gegenstände innerhalb der Sicherheitsumgebung als gegebenenfalls auch potentielle Gefahren durch Gegenstände in der erweiterten Sicherheitsumgebung können auf diese Weise erkannt werden. Funkenschlägen und Kurzschlüssen kann dadurch vorgebeugt werden. Falls bereits Funkenschläge oder Kurzschlüsse erfolgt sind, kann deren Ursprung und Grund erkannt und in einem weiteren Schritt auch beseitigt werden.

Alternativ kann die Inspektionsvorrichtung zur Inspektion eines kleineren Raumes als der Sicherheitsumgebung der Kabelanlage ausgerüstet sein. Oder die Inspektionsvorrichtung kann zur Inspektion eines grösseren Raumes als der erweiterten Sicherheitsumgebung der Kabelanlage ausgerüstet sein. Beispielsweise kann die Inspektionsvorrichtung auch dazu ausgerüstet sein, eine Umgebung der Masten zu inspizieren. Dies kann beispielsweise zu einer Überwachung von Vegetation im Bereich der Masten dienen.

Als anderes optionales Merkmal ist die Inspektionsvorrichtung zur Inspektion eines Inspektionsbereichs ausgerüstet. Der Inspektionsbereich ist durch einen Öffnungswinkel von maximal 360 Grad, insbesondere von maximal 180 Grad und insbesondere von maximal 90 Grad begrenzt. Der Öffnungswinkel weist einen Scheitelpunkt in der Inspektionsvorrichtung auf.

Der Inspektionsbereich kann durch seinen Öffnungswinkel mehrere Kabel und/oder Teile der Kabelanlage umfassen, was eine effiziente Inspektion der Kabelanlage erlaubt. Der Inspektionsbereich kann mit der Sicherheitsumgebung teilweise überlappen. Der Inspektionsbereich kann Schnitte der Sicherheitsumgebung vollständig umfassen. Der Inspektionsbereich kann auch mit der erweiterten Sicherheitsumgebung teilweise überlappen. Der Inspektionsbereich kann Schnitte der erweiterten Sicherheitsumgebung umfassen.

Insbesondere kann der Öffnungswinkel im Wesentlichen nach unten gerichtet sein. Der Öffnungswinkel ist im Wesentlichen nach unten gerichtet, wenn der Öffnungswinkel kleiner als 360 Grad ist und ein vom Öffnungswinkel umfasster Teil einer Öffnungswinkelhalbierenden nicht mehr als 45 Grad, insbesondere nicht mehr als 30 Grad und insbesondere nicht mehr als 15 Grad von der Gravitationsrichtung abweicht. Ein Öffnungswinkel von 360 Grad kann definitionsgemäss nicht im Wesentlichen nach unten gerichtet sein.

Ein im Wesentlichen nach unten gerichteter Öffnungswinkel erlaubt eine gleichzeitige Inspektion von Teilen der Kabelanlage, Teilen des Bodens und/oder von bodennahen Gegenständen. Insbesondere kann ein Kabelfahrzeug mit im Wesentlich nach unten gerichtetem Öffnungswinkel der Inspektionsvorrichtung auf einem weit oben liegenden (beispielsweise auch dem obersten) Kabel der Kabelanlage fahren und dabei grosse Teile der Kabelanlage und deren Umgebung inspizieren. Weit oben liegende Kabel der Kabelanlage können einfach anzufliegen sein. Weit oben liegende Kabel können auch als nicht zum Transportieren von Energie vorgesehene Kabel (Erdungskabel, Sicherheitskabel, Transportkabel, Kabel zur mechanischen Verstärkung der Kabelanlage) ausgebildet sein, auf welchen das Kabelfahrzeug mit geringem Risiko fahren kann.

Ein Öffnungswinkel von 360 Grad erlaubt eine Inspektion in alle Richtungen um das Kabelfahrzeug herum. Insbesondere kann die Inspektionsvorrichtung mit einem Öffnungswinkel von 360 Grad die Kabelanlage von allen Kabeln aus inspizieren, beispielsweise auch von unten liegenden Kabeln und/oder seitlich angeordneten Kabeln aus. Unten liegende und/oder seitlich angeordnete Kabel können abhängig von Rahmenbedingungen einfach anzufliegen sein (beispielsweise, wenn die Kabel weit voneinander beabstandet sind). Auch andere als weit oben liegende Kabel können als nicht zum Transportieren von Energie vorgesehene Kabel ausgebildet sein (mit dem entsprechenden Vorteil des geringen Risikos beim befahren).

Ein Öffnungswinkel von 360 Grad erlaubt es der Inspektionsvorrichtung auch, in jeder räumlichen Lage Daten zu ihrer relativen räumlichen Position in Bezug zur Kabelanlage (insbesondere zu den Kabeln), zum Boden und/oder zu weiteren Objekten oder Gegenständen zur Verfügung zu Stellen. Die relative räumliche Position kann als Information für automatische, manuelle und/oder halbautomatische Bewegungen der Inspektionsvorrichtung verwendet werden.

Ein Öffnungswinkel von kleiner als 360 Grad erlaubt eine entsprechend räumlich begrenzte Ermittlung der relativen räumlichen Position. Auch diese begrenzte Ermittlung kann als Information für automatische, manuelle und/oder halbautomatische Bewegungen der Inspektionsvorrichtung verwendet werden.

Ein Öffnungswinkel von 360 Grad erlaubt es der Inspektionsvorrichtung des Kabelfahrzeugs auch, die Kabelanlage kombiniert aus verschiedenen Positionen zu inspizieren. Dies bedeutet, dass beispielsweise bereits bei einem Start vom Boden und/oder einem Anfliegen eines obersten Kabels die Kabelanlage inspiziert werden kann und diese Informationen mit Informationen der Inspektion beim Fahren auf dem obersten Kabel in eine räumliche Beziehung zueinander gebracht werden können. Dasselbe gilt für Flüge zum Überwinden von Hindernissen und/oder eine Landung des Kabelfahrzeugs.

Insbesondere kann das Kabelfahrzeug mit der Inspektionsvorrichtung mit Öffnungswinkel von 360 Grad auch die Kabelanlage je nach Rahmenbedingung in verschiedenen Bereichen der Kabelanlage auf verschiedenen Kabeln fahrend inspizieren und trotz verschiedener relativer räumlichen Positionen vorgesehene Informationen aus der Inspektion erhalten. Diese Informationen aus verschiedenen relativen räumlichen Positionen können in eine räumliche Beziehung zueinander gebracht werden. Durch die räumliche Beziehung zueinander können Informationen miteinander verknüpft und gemeinsam ausgewertet werden.

Beispielsweise kann durch starke Winde ein unten liegendes Kabel bereichsweise besser befahrbar sein als oben liegende Kabel. Oder bestimmte Kabel sind wegen kreuzenden Kabelanlagen oder baulichen Massnahmen in verschiedenen Bereichen der Kabelanlage besser erreichbar als andere. Oder einzelne Kabel und/oder Kabelabschnitte sind wegen Defekten, Verunreinigungen, Beschädigungen, Ablagerungen und/oder Fremdkörpern in verschiedenen Bereichen der Kabelanlage besser befahrbar als andere. Das Kabelfahrzeug kann je nach den genannten Rahmenbedingungen in verschiedenen Bereichen der Kabelanlage jeweils geeignete Kabel zur Inspektion benutzen, ohne dass ein Informationsgehalt der Inspektion darunter leidet.

Optional umfasst der Flugmechanismus eine Kabellandesteuerung. Die Kabellandesteuerung ist zum automatischen Landen des Kabelfahrzeugs auf dem mindestens einen Kabel der Kabelanlage ausgerüstet.

Mit Start wird ein Beginn einer Flugphase bezeichnet. Und mit Landung wird ein Ende einer Flugphase bezeichnet. Eine automatische Landung des Kabelfahrzeugs auf dem mindestens einen Kabel der Kabelanlage erlaubt eine sichere Bedienung des Kabelfahrzeugs. Durch die automatische Landung können Fehlerquellen eliminiert werden, wie etwa eine Reaktionszeit von Fachkräften, welche die Landung steuern. Aber auch Verbindungsprobleme von Fernsteuerung und/oder Bildübertragungssystemen oder anderen Näherungsmechanismen können als Fehlerquelle bei der Landung ausgeschlossen werden. Das Kabelfahrzeug kann dadurch auch ausserhalb eines Bereichs von Funkkontakt betrieben werden.

Das Kabelfahrzeug kann die automatische Landung auf dem mindestens einen Kabel der Kabelanlage halbautomatisch oder vollautomatisch vornehmen. Mit Vollautomatisch ist gemeint, dass das Kabelfahrzeug die Landung vollständig autonom ausführt. Mit Halbautomatisch wird eine automatische Landung bezeichnet, welche mindestens einen Instruktion von ausserhalb des Kabelfahrzeugs beinhaltet. Diese Instruktion von ausserhalb des Kabelfahrzeugs kann beispielsweise eine Auswahl und/oder Bestätigung eines Kabels zur Landung sein.

Beispielsweise kann das Kabelfahrzeug einen Flug vom Start am Boden oder von dem mindestens einen Kabel bis zur Landung auf dem mindestens einen Kabel halbautomatisch oder vollautomatisch vornehmen.

Insbesondere kann die Kabellandesteuerung derart ausgerüstet sein, dass eine Landung des Kabelfahrzeugs am Boden ebenfalls halbautomatisch oder vollautomatisch vorgenommen werden kann.

In einer Ausführungsform kann die Kabellandesteuerung von der Inspektionsvorrichtung Daten bezüglich der relativen räumlichen Position des Kabelfahrzeugs in Bezug zu der Kabelanlage (insbesondere zu einem oder mehreren Kabeln), zum Boden und/oder zu weiteren Objekten oder Gegenständen erhalten und diese Daten für die automatische Landung nutzen. Beispielsweise erlaubt dabei eine Inspektionsvorrichtung mit einem Öffnungswinkel von 360 Grad einen hohen Sicherheitsgrad der automatischen Landung.

Insbesondere umfasst das Kabelfahrzeug eine Steuerung, welche neben der automatischen Landung auf dem mindestens einen Kabel und/oder dem Boden auch zu einem automatischen Start von dem mindestens einen Kabel und/oder dem Boden ausgerüstet ist. Die Steuerung kann beispielsweise auch zu einem automatischen Ausführen einer ganzen Flugphase von Start bis Landung ausgerüstet sein. Die Steuerung kann optional zu einem automatischen Fahren des Kabelfahrzeugs ausgerüstet sein.

In einer Ausführungsform kann das Kabelfahrzeug eine Steuerung umfassen, welche zum automatischen (und insbesondere vollautomatischen oder teilautomatischen) Bewegen des Kabelfahrzeugs beim Inspizieren der Kabelanlage ausgerüstet ist. Dabei umfasst dieses automatische Bewegen des Kabelfahrzeugs automatisches Fliegen des Kabelfahrzeugs und automatisches Fahren des Kabelfahrzeugs. Genauer gesagt umfasst das automatische Bewegen des Kabelfahrzeugs beim Inspizieren der Kabelanlage folgende automatischen Bewegungen des Kabelfahrzeugs: Start vom Boden, Flug zum mindestens einen Kabel der Kabelanlage, Landung auf diesem Kabel, Fahren auf dem Kabel, Start vom Kabel, Flug zum Boden und Landung auf dem Boden. Gegebenenfalls kann das automatische Bewegen des Kabelfahrzeugs ebenfalls mindestens ein Überwinden eines Hindernisses und ein weiteres Fahren auf dem Kabel umfassen. Das Inspizieren der Kabelanlage mit der Inspektionsvorrichtung erfolgt dabei mindestens während dem Fahren des Kabelfahrzeugs auf dem Kabel.

Die automatische Landung des Kabelfahrzeugs auf dem mindestens einen Kabel der Kabelanlage kann die Landung präziser und/oder sicherer machen. Zudem wird die Fachkraft entlastet, welche sich auf andere Aufgaben als die Landung konzentrieren kann. Die automatische Landung kann durch eine kurze Dauer auch die Effizienz der Inspektion steigern.

Die Landung des Kabelfahrzeugs auf dem mindestens einen Kabel der Kabelanlage kann aber auch manuell erfolgen.

In einer optionalen Ausführungsform umfasst der Flugmechanismus einen Multikopter.

Ein Multikopter umfasst eine Mehrzahl von Rotoren, welche um parallele Achsen rotieren, wobei diese Rotoren Auftrieb erzeugen und mittels untereinander teilweise unterschiedlichen Drehzahlen (Umdrehungen der Rotoren pro Zeiteinheit) ein freies Manövrieren erlauben. Mit freiem Manövrieren wird ein Ändern einer räumlichen Position in einer beliebigen Raumrichtung bezeichnet.

Ein Multikopter ist ein zuverlässiger und bewährter Antrieb für einen Flugmechanismus. Der Multikopter erlaubt kontrolliertes langsames Fliegen und/oder kontrolliertes Schweben. Der Multikopter erlaubt kontrollierte Flugbewegungen (inklusive Start und Landung) in vertikaler Richtung (also in Gravitationsrichtung oder entgegen der Gravitationsrichtung). Multikopter und Bestandteile von Multikoptern werden bereits in grossen Stückzahlen und kostengünstig hergestellt.

Der Multikopter kann acht Rotoren umfassen. Insbesondere kann der Multikopter sechs Rotoren umfassen. Der Multikopter kann beispielsweise aber auch vier Rotoren umfassen.

Die Rotoren können insbesondere so angeordnet sein, dass sich in einer Projektion in Schwerkraftrichtung eine halbe Anzahl der Rotoren auf einer ersten Seite des Kabels, und eine halbe Anzahl der Rotoren auf einer zweiten, der ersten gegenüber liegenden Seite des Kabels befinden, wenn sich das Kabelfahrzeug in Fahrposition befindet. Insbesondere können beim Kabelfahrzeug in Fahrposition die Rotoren des Flugmechanismus neben dem Kabelfahrmechanismus angeordnet sein.

Neben dem Kabelfahrmechanismus angeordnet bedeutet im Wesentlichen auf gleicher Höhe wie der Kabelfahrmechanismus liegend. Ein Rotor ist neben dem Kabelfahrmechanismus angeordnet, wenn der Schwerpunkt des Rotors weder oberhalb noch unterhalb des Kabelfahrmechanismus angeordnet ist, insbesondere maximal 2 cm oberhalb oder unterhalb des Kabelfahrmechanismus angeordnet ist und insbesondere maximal 5 cm oberhalb oder unterhalb des Kabelfahrmechanismus angeordnet ist.

Befindet sich das Kabelfahrzeug in Fahrposition, so hat eine Anordnung der Rotoren und insbesondere des Flugmechanismus neben dem Kabelfahrmechanismus den Vorteil, dass der Schwerpunkt des Kabelfahrzeugs weit unten zu liegen kommt. Zudem wird die Gefahr der Berührung zwischen Kabel und Rotoren minimiert.

Je näher der Schwerpunkt des Kabelfahrzeugs in Fahrposition senkrecht unter dem Kabel angeordnet ist, umso mehr kann das Kabelfahrzeug in Fahrposition in der Längsachse hin und her schwanken. Dies birgt die Gefahr eines Kippens und möglicherweise Herunterfallens vom Kabel.

Eine Berührung zwischen Kabel und Rotoren kann zustande kommen, wenn das Fluggerät während des Fliegens beispielsweise durch eine Windböe kurzzeitig abgetrieben wird und das Kabel verfehlt, während es sich im Sinkflug befindet. Insbesondere liegen die Rotorschwerpunkte höchstens 40 Prozent des Abstandes zwischen Kabel und Rotorschwerpunkt oberhalb oder unterhalb des Kabels, wenn sich das Kabelfahrzeug in Fahrposition befindet.

Mit oberhalb oder unterhalb des Kabels ist die Komponente in Gravitationsrichtung eines Abstandes gemeint. Somit beträgt die Komponente in Gravitationsrichtung des Abstandes zwischen Kabel und Rotorschwerpunkt insbesondere maximal 40 Prozent des Gesamtabstandes zwischen Kabel und Rotorschwerpunkt.

Mit Fahrposition ist eine Position des Kabelfahrzeugs gemeint, in welcher es auf dem mindestens einen Kabel der Kabelanlage zu fahren imstande ist.

Insbesondere liegen die Rotorschwerpunkte einer ersten halben Anzahl der Rotoren auf einer ersten Gerade und die Rotorschwerpunkte einer zweiten halben Anzahl der Rotoren, welche von den Rotoren der ersten halben Anzahl verschieden sind, auf einer zweiten Gerade, wobei die erste Gerade parallel zur zweiten Gerade angeordnet ist.

Insbesondere weisen die Rotorschwerpunkte aller Rotoren den gleichen Abstand zum Kabel auf, wenn sich das Kabelfahrzeug in Fahrposition befindet.

Mit Rotorschwerpunkt ist der Massenmittelpunkt des Propellers ohne dem daran befestigten Motor gemeint. Ganz allgemein ist unter einem Schwerpunkt ein Massenmittelpunkt zu verstehen.

Der Flugmechanismus kann auch einen anderen Antrieb als einen Multikopter umfassen. Beispielsweise kann der Flugmechanismus analog zu einem klassischen Helikopter einen Hauptrotor mit einem senkrecht dazu rotierenden Stabilisationsrotor (Heckrotor) umfassen.

Als Option umfasst der Kabelfahrmechanismus einen elektrischen Antrieb.

Durch den elektrischen Antrieb im Kabelfahrmechanismus kann das Kabelfahrzeug auf dem mindestens einen Kabel der Kabelanlage elektrisch angetrieben fahren.

Elektrische Antriebe sind energieeffizient und geräuscharm. Elektrische Antriebe sind zuverlässige und bewährte Antriebe zum Fahren. Elektrische Antriebe werden bereits in grossen Stückzahlen und kostengünstig produziert. Elektrische Antriebe sind kompakt ausgebildet. Elektrische Antriebe weisen über einen grossen Drehzahlbereich eine gute Effizienz auf, wodurch Getriebe einen kleinen Übersetzungsbereich abdecken müssen oder ganz wegfallen. Auch Übersetzungen sind nicht immer nötig.

Der Kabelfahrmechanismus kann aber auch einen von einem elektrischen Antrieb verschiedenen Antrieb umfassen. Beispielsweise kann der Kabelfahrmechanismus einen Verbrennungsmotor umfassen.

Insbesondere kann der Flugmechanismus einen elektrischen Antrieb umfassen. Die entsprechenden Vorteile des elektrischen Antriebs sind bereits weiter oben beschrieben.

In einer besonderen Ausführungsform können sowohl der Kabelfahrmechanismus als auch der Flugmechanismus einen elektrischen Antrieb umfassen. Dies erlaubt dem Kabelfahrzeug, eine elektrische Stromversorgung zu umfassen, welche den Kabelfahrmechanismus und den Flugmechanismus speist (zeitlich getrennt oder gleichzeitig). Dies ist konstruktiv günstig und reduziert Grösse, Gewicht und Kosten des Kabelfahrzeugs.

Als weitere Option weist der Kabelfahrmechanismus zwei oder mehr Rollen auf. Dabei ist mindestens eine Rolle angetrieben.

Mit Rollen des Kabelfahrmechanismus werden Teile des Kabelfahrmechanismus bezeichnet, welche in einer Fahrposition mit dem mindestens einen Kabel der Kabelanlage kontaktschlüssig in Verbindung stehen und darauf abrollen, beispielsweise Rollen, Walzen, Scheiben oder Räder. Die angetriebene Rolle erreicht durch Reibung mit dem Kabel ein Fahren des Kabelfahrzeugs auf dem Kabel. Die angetriebene Rolle treibt also das Kabelfahrzeug an.

Das Kabelfahrzeug kann durch Fahren auf Rollen energieeffizient fortbewegt werden. Ein Antrieb der mindestens einen Rolle kann einfach ausgebildet werden. Weist der Kabelfahrmechanismus zwei oder mehr Rollen auf, wobei die zwei oder mehr Rollen auf dem mindestens einen Kabel der Kabelanlage rollen, so erhöht sich die Stabilität des Kabelfahrzeugs in der Fahrposition. Insbesondere wird das Kabelfahrzeug in der Fahrposition gegen Verkippen und/oder Verdrehen geschützt. Mit Verkippen ist eine Bewegung in einer Richtung senkrecht zum mindestens einen Kabel gemeint, wobei die Rollen auf dem Kabel ihre Richtung beibehalten. Mit Verdrehen ist gemeint, dass die Richtung der Rollen auf dem Kabel sich relativ zur Richtung des Kabels dreht.

Insbesondere können zwei oder mehr Rollen des Kabelfahrzeugs auf demselben Kabel rollen. Dies erhöht in der Fahrposition die Stabilität des Kabelfahrzeugs in einer Richtung entlang des Kabels. Insbesondere reduziert sich dadurch eine Gefahr des Verkippens und/oder des Verdrehens.

Insbesondere weist der Kabelfahrmechanismus genau zwei Rollen auf.

Ein Kabelfahrmechanismus mit genau zwei Rollen ist einfach aufgebaut und dennoch stabil auf dem Kabel positioniert sofern er sich in der Fahrposition befindet. Insbesondere weisen die zwei Rollen einen Achsabstand von mindestens 0.70 Meter auf.

Ein Achsabstand der zwei Rollen von mindestens 0.70 Meter reduziert die Gefahr eines Verkippens und/oder eines Verdrehens während des Fahrens auf dem Kabel, wenn sich das Kabelfahrzeug in Fahrposition befindet.

Insbesondere ist beim Kabelfahrmechanismus genau eine Rolle angetrieben.

Ein Kabelfahrmechanismus mit genau einer angetriebenen Rolle kann kompakt, leicht und kostengünstig ausgebildet werden.

Es können auch mehrere oder alle Rollen des Kabelfahrmechanismus angetrieben sein.

Als weitere Option weist das Kabelfahrzeug einen Ausrichtungsmechanismus auf. Dieser Ausrichtungsmechanismus ist dazu ausgerüstet, die zwei oder mehr Rollen des Kabelfahrmechanismus in einer Position mit einer Neigung relativ zu einer Referenzebene anzuordnen, wobei eine Funktionsrichtung des Flugmechanismus senkrecht zur Referenzebene verläuft.

Als Funktionsrichtung des Flugmechanismus wird eine Richtung bezeichnet, in welcher sich der Flugmechanismus bei einer Flugbewegung bewegt. Ist ein Flugmechanismus in der Lage, in der Luft zu schweben und am selben Raumpunkt zu verharren, dann weist die Funktionsrichtung des Flugmechanismus beim Schweben in der Luft (ohne Wind) in eine der Gravitationsrichtung entgegen gesetzte Richtung, obwohl dabei keine eigentliche Flugbewegung im Sinn einer Änderung einer räumlichen Position erfolgt. Die Funktionsrichtung kann vereinfacht auch als Flugrichtung bezeichnet werden.

Beispielsweise verläuft bei einem einzelnen Rotor mit starren Rotorblättern (d.h. bei gleichbleibendem Einstellwinkel der Rotorblätter) die Funktionsrichtung parallel zur Rotationsachse des Rotors. Beispielsweise verläuft bei einem Multikopter, bei welchem alle Rotoren mit derselben Drehzahl drehen, die Funktionsrichtung parallel zu den Rotationsachsen der Rotoren. Gemäss einer üblichen Funktionsweise von Multikoptern können die Drehzahlen der Rotoren voneinander verschieden gross sein, wodurch die Funktionsrichtung von der Richtung der Rotationsachsen der Rotoren abweichen kann.

Zwei oder mehr Rollen des Kabelfahrmechanismus sind dann in einer Position mit einer Neigung relativ zur Referenzebene angeordnet, wenn ein in Fahrposition an die zwei oder mehr Rollen anliegender und die Rollen verbindender Kabelabschnitt einen Winkel relativ zur Referenzebene aufweist. Eine Gerade durch diesen Kabelabschnitt schneidet die Referenzebene in einem Winkel, welcher als Neigung bezeichnet wird. Verläuft der in Fahrposition an die Rollen anliegende und die Rollen verbindender Kabelabschnitt parallel zur Referenzebene, dann sind die zwei oder mehr Rollen ohne Neigung relativ zur Referenzebene angeordnet. Mit anderen Worten: verläuft die Funktionsrichtung senkrecht zu einem in Fahrposition auf die zwei oder mehr Rollen anliegenden und diese Rollen verbindenden Kabelabschnitt, so weisen die zwei oder mehr Rollen keine Neigung relativ zur Referenzebene auf.

Indem der Ausrichtungsmechanismus die zwei oder mehr Rollen mit einer Neigung zur Referenzebene auszurichten imstande ist, kann bei einem Start (d.h. einem Beginn der Flugbewegung) des Kabelfahrzeugs von dem mindestens einen Kabel aus die Flugrichtung des Kabelfahrzeugs unabhängig von einer räumlichen Anordnung der Rollen gewählt werden. Dies ist insbesondere von Vorteil, wenn das Kabelfahrzeug von dem mindestens einen Kabel, auf welchem es fährt, startet und dieses mindestens eine Kabel an der Stelle des Starts eine Neigung gegenüber der Horizontalen aufweist. Mit anderen Worten kann das Kabelfahrzeug dank des Ausrichtungsmechanismus in eine von der Kabelrichtung unabhängige Richtung fliegen. Beispielsweise erlaubt es der Ausrichtungsmechanismus dem Kabelfahrzeug, bei durchhängenden Kabeln und/oder nicht horizontal verlaufenden Kabeln an jeder Stelle des Kabels (bis zu einer maximalen Neigung des Ausrichtungsmechanismus) in vertikaler Richtung zu starten bzw. in vertikaler Richtung auf jeder oben genannten Stelle des Kabels zu landen.

Falls die Neigung des Kabels die maximale Neigung des Ausrichtungsmechanismus überschreitet, erfolgt bei einer in vertikaler Richtung vorgesehenen Landung eine Kippbewegung mit einer ersten das Kabel berührende Rolle als Angelpunkt, weil die ursprünglich vertikale Funktionsrichtung des Flugmechanismus nach einem Aufsetzen der ersten Rolle auf das Kabel und auf einem Weg zum Aufsetzen der mindestens einen weiteren Rolle von der Vertikalen abweicht. Bei einem in vertikaler Richtung vorgesehenen Start verläuft dieser Vorgang in umgekehrter Reihenfolge, und somit weicht in diesem Fall die Funktionsrichtung von der Vertikalen ab, bis kurz vor dem vollständigen Abheben des Kabelfahrzeugs vom Kabel nur noch eine letzte Rolle das Kabel berührt. Im Vergleich mit Kabelfahrzeugen ohne Ausrichtungsmechanismus ist diese Kippbewegung durch den Ausrichtungsmechanismus reduziert, wenn die Neigung des Kabels die maximale Neigung des Ausrichtungsmechanismus überschreitet (oder wie bereits oben beschrieben eliminiert, wenn die Neigung des Kabels gleich gross oder geringer ist als die maximale Neigung des Ausrichtungsmechanismus).

Die Horizontale steht senkrecht zur Vertikalen. Die Vertikale verläuft parallel zur Gravitationsrichtung.

Analog zu den Vorteilen des Ausrichtungsmechanismus beim Start des Kabelfahrzeugs ergeben sich auch die Vorteile des Ausrichtungsmechanismus bei der Landung des Kabelfahrzeugs auf dem mindestens einen Kabel der Kabelanlage. Das Kabelfahrzeug kann dank des Ausrichtungsmechanismus in einer von der Kabelrichtung unabhängigen Richtung auf dem Kabel landen. Beispielsweise erlaubt es der Ausrichtungsmechanismus dem Kabelfahrzeug, bei durchhängenden Kabeln an jeder Stelle des Kabels (bis zu einer maximalen Neigung des Ausrichtungsmechanismus) in vertikaler Richtung zu landen.

Insbesondere kann der Ausrichtungsmechanismus derart ausgerüstet sein, dass nur der Flugmechanismus (oder Teile des Flugmechanismus, insbesondere Rotoren eines Multikopters) räumlich fest zur Referenzebene angeordnet ist. Mit anderen Worten kann der Ausrichtungsmechanismus derart ausgerüstet sein, dass er beim Anordnen der zwei oder mehr Rollen mit einer Neigung zur Referenzebene auch den Kabelfahrmechanismus und/oder die Inspektionsvorrichtung mit einer Neigung zur Referenzebene anordnet. Insbesondere kann der Ausrichtungsmechanismus derart ausgerüstet sein, dass er mit Ausnahme des Flugmechanismus oder Teilen des Flugmechanismus (insbesondere Rotoren eines Multikopters) das ganze Kabelfahrzeug mit einer Neigung zur Referenzebene anordnen kann

Das Kabelfahrzeug kann alternativ aber auch frei von einem Ausrichtungsmechanismus ausgebildet sein.

Der Ausrichtungsmechanismus kann optional dazu ausgerüstet sein, die zwei oder mehr Rollen des Kabelfahrmechanismus in einer Position mit einer Neigung in einem Bereich von -30 Grad bis 30 Grad relativ zur Referenzebene anzuordnen.

Anders ausgedrückt kann die maximale Neigung des Ausrichtungsmechanismus relativ zur Referenzebene 30 Grad in beide Richtungen betragen.

Insbesondere kann die maximale Neigung des Ausrichtungsmechanismus relativ zur Referenzebene 40 Grad in beide Richtungen betragen. Insbesondere kann die maximale Neigung des Ausrichtungsmechanismus relativ zur Referenzebene 20 Grad in beide Richtungen betragen.

Als weitere Option umfasst die Inspektionsvorrichtung eine Kamera, welche zu einem Erstellen eines Bildes mit mehreren voneinander beabstandeten Kabeln der Kabelanlage, beispielsweise aller Kabel, die unter dem Kabel liegen, auf dem das Fahrzeug fährt, ausgerüstet ist.

Indem eine Kamera Bilder erfasst, auf welchen gleichzeitig mehrere voneinander beabstandete Kabel der Kabelanlage zu sehen sind, können mehrere Kabel gleichzeitig inspiziert werden. Dies erhöht die Effizienz der Inspektion und erlaubt eine rasche Inspektion der Kabelanlage.

Eine zu inspizierende Kabelanlage weist typischerweise eine vorgegebene räumliche Position der Kabel auf. Durch eine entsprechende Positionierung der Kamera am Kabelfahrzeug und einer entsprechenden Ausrichtung der Kamera kann sichergestellt werden, dass die mehreren von der Kamera gleichzeitig erfassten Kabel sich im auszuwertenden Bildausschnitt nicht überlappen. Insbesondere kann die Kamera für verschiedene Kabelanlagen an verschiedenen Stellen des Kabelfahrzeugs befestigt und/oder verschieden ausgerichtet werden. Insbesondere kann die Kamera ferngesteuert ausgerichtet werden.

Optional weist das Kabelfahrzeug zwei oder mehr Kameras zur Inspektion von je gleichzeitig mehreren Kabeln auf. Auch diese zwei oder mehr Kameras können insbesondere an verschiedenen Stellen des Kabelfahrzeugs befestigt und/oder verschieden ausgerichtet werden. Insbesondere können die zwei oder mehr Kameras ferngesteuert ausgerichtet werden.

Eine Kamera erlaubt eine visuelle Inspektion der Kabel. Insbesondere können durch Filter und/oder spezifische optische Lichtquellen verschiedene Eigenschaften der Kabel untersucht werden, welche dem menschlichen Auge ohne Hilfsmittel unzugänglich sind (z.B. durch Effekte der Polarisation, spezifischer Wellenlängen wie Infrarot und/oder Ultraviolett und der gleichen).

Aufnahmen einer Kamera können einfach durch Fachkräfte und/oder durch automatische Bildauswertung (z.B. durch entsprechende Software) gesichtet werden. Aufnahmen einer Kamera können effizient und kostengünstig gespeichert werden. Kameras sind bereits in einer Vielzahl von Ausführungsformen aus dem Stand der Technik bekannt und sind kostengünstig, raumsparend und effizient zur Inspektion von Kabelanlagen mit einem Kabelfahrzeug einsetzbar.

Die Kamera kann Bilder als Einzelbilder erfassen. Das Erfassen eines Bildes kann beispielsweise in einem bestimmten zeitlichen und/oder räumlichen Abstand erfolgen. Einzelbilder können eine hohe Auflösung aufweisen. Eine Serie von Einzelbildern ist einfach und rasch auszuwerten und benötigt wenig Speicherplatz. Insbesondere kann die Kamera zum Erfassen von Bildern als Film ausgerüstet sein

Die Inspektionsvorrichtung kann aber auch eine Kamera umfassen, welche zu einem Erstellen eines Bildes mit einem Kabel der Kabelanlage ausgerüstet ist. Mindestens ein weiteres Kabel der Kabelanlage, welches sich vom von der Kamera erfassten Kabel unterscheidet, wird dabei von einem anderen Teil der Inspektionsvorrichtung inspiziert.

Insbesondere kann die Inspektionsvorrichtung eine erste Kamera und eine zweite Kamera umfassen. Dabei ist die erste Kamera wie bereits oben beschrieben zu einem Erstellen eines Bildes mit mehreren voneinander beabstandeten Kabeln der Kabelanlage ausgerüstet. Die zweite Kamera ist dazu ausgerüstet, von Kabeln verschiedene Teile der Kabelanlage zu inspizieren, insbesondere Masten der Kabelanlage zu inspizieren. Die zweite Kamera kann schwenkbar am Kabelfahrzeug befestigt sein. Die zweite Kamera kann mindestens teilweise in Fahrtrichtung des Kabelfahrzeugs ausgerichtet sein, um Bilder von Masten mit einem grossen Blickwinkel erstellen zu können. Masten stehen typischerweise quer zu an ihnen befestigten Kabeln, wodurch Bilder in Richtung eines Verlaufs des Kabels einen grossen Blickwinkel auf die Masten und dadurch eine gute visuelle Inspektion erlauben.

Optional umfasst die Inspektionsvorrichtung einen Distanzmesser, welcher dazu ausgerüstet ist, Distanzen mit Laserstrahlen zu messen. Insbesondere ist der Distanzmesser dazu ausgerüstet, Distanzen in der Sicherheitsumgebung und/oder im Inspektionsbereich zu messen.

Der Distanzmesser kann beispielsweise dazu ausgerüstet sein, gleichzeitig die Distanz zu mehreren voneinander beabstandeten Kabeln der Kabelanlage während des angetriebenen Fahrens auf dem mindestens einen Kabel zu messen.

Der Distanzmesser ist optional derart ausgerüstet, während des angetriebenen Fahrens auf dem mindestens einen Kabel eine Distanz zu höchstens einem Kabel der Kabelanlage gleichzeitig zu messen. Insbesondere kann der Distanzmesser kann dazu ausgerüstet sein, während des angetriebenen Fahrens auf dem mindestens einen Kabel Distanzen zu von Kabeln verschiedenen Teilen der Kabelanlage und/oder zu der Umgebung der Kabelanlage zu messen.

Der Distanzmesser erlaubt eine Inspektion der Kabelanlage durch Auswertung der gemessenen Distanzen zu den vom Distanzmesser erfassten Teilen der Kabelanlage und/oder der vom Distanzmesser erfassten Umgebung der Kabelanlage (also zu Gegenständen, zu Objekten und/oder zum Boden).

Ein Distanzmesser mit Lasertechnik kann kostengünstig, präzise und rasch Distanzen zwischen der Inspektionsvorrichtung und anderen Gegenständen erfassen. Solche Distanzmesser sind bereits in einer Vielzahl von Ausführungsformen aus dem Stand der Technik bekannt und sind kostengünstig, raumsparend und effizient zur Inspektion von Kabelanlagen mit einem Kabelfahrzeug einsetzbar. Beispielsweise werden mit dem Distanzmesser gleichzeitig Distanzen zwischen der Inspektionsvorrichtung und mehreren voneinander beabstandeten Kabeln der Kabelanlage gemessen. Insbesondere können mit solch einem Distanzmesser Gegenstände (wie beispielsweise Teile der Vegetation) erfasst werden, welche der Sicherheitsumgebung oder der erweiterten Sicherheitsumgebung nahe kommen und/oder darin eindringen.

Die Inspektionsvorrichtung kann auch Distanzmesser umfassen, welche mit einer anderen Methode als mit Laserstrahlen Distanzen messen, wie beispielsweise etwa mit Schall und/oder mit Stereometrie. Die Inspektionsvorrichtung kann auch frei von einem Distanzmesser ausgebildet sein.

Als weiteres optionales Merkmal weist das Kabelfahrzeug mindestens ein Führungselement auf. Dieses Führungselement ist dazu ausgerüstet, den Kabelfahrmechanismus relativ zum mindestens einen Kabel der Kabelanlage zu führen. Insbesondere ist der Kabelfahrmechanismus dazu ausgerüstet, das mindestens eine Kabel bei einem Herausspringen aus dem Kabelfahrmechanismus während des Fahrens wieder dahin zurückzuführen.

Dieses Führungselement kann den Kabelfahrmechanismus in der Fahrposition des Kabelfahrzeugs also bezüglich des mindestens einen Kabels der Kabelanlage führen, was bedeutet, dass der Kabelfahrmechanismus durch das Führungselement relativ zum mindestens einen Kabel in eine bestimmte räumliche Position angeordnet wird. Dies kann beispielsweise durch eine spezifische geometrische Form und/oder räumliche Anordnung des Führungselements erreicht werden.

Beispielsweise kann das Führungselement bei einer Landung des Kabelfahrzeugs auf einem Kabel der Kabelanlage das Kabel derart führen, dass Rollen des Kabelfahrmechanismus auf das Kabel zu liegen kommen.

Insbesondere können zwei Führungselemente derart zum Kabelfahrmechanismus angeordnet sein, dass die Führungselemente eine V-förmige Struktur mit dem Kabelfahrmechanismus als Scheitelpunkt bilden. Diese V-förmig angeordneten Führungselemente führen das mindestens eine Kabel in Richtung des Kabelfahrmechanismus.

Durch ein oder mehrere Führungselemente kann das Kabelfahrzeug auch derart ausgerüstet sein, dass das mindestens eine Kabel bei einem Herausspringen aus dem Kabelfahrmechanismus während des Fahrens (also in der Fahrposition des Kabelfahrzeugs) wieder dahin zurückgeführt wird. Beispielsweise ist dies auch der Fall bei den oben beschriebenen zwei V-förmig angeordneten Führungselementen.

Insbesondere kann ein Führungselement nahe den Rollen einen senkrechten Teil aufweisen. Der senkrechte Teil ist derart ausgebildet und angeordnet, dass er in Fahrposition des Kabelfahrzeugs in vertikaler Richtung verläuft. Aufgrund dieses senkrechten Teils kann sich der Fahrmechanismus und/oder das ganze Kabelfahrzeug von der Fahrposition auf einem Kabel ausgehend bis annähernd neunzig Grad um eine Längsachse dieses Kabels hin und her drehen, ohne dass das Kabelfahrzeug von diesem Kabel fällt. Das Kabelfahrzeug fällt dabei nicht vom Kabel, weil der senkrechte Teil des Führungselements am Kabel aufliegt.

Das Kabelfahrzeug kann aber auch frei von einem Führungselement ausgebildet sein.

Sofern das Kabelfahrzeug ein Führungselement umfasst, kann das Führungselement optional zusätzlich als Standbein des Kabelfahrzeugs ausgebildet sein für den Fall, dass das Kabelfahrzeug abseits des mindestens einen Kabels der Kabelanlage aufsetzt.

Mit anderen Worten kann das mindestens eine Führungselement neben seiner Funktion als Führungselement für den Kabelfahrmechanismus in der Fahrposition auch als Standbein für das Kabelfahrzeug bei anderen Positionen als der Fahrposition ausgebildet sein. Dies ist beispielsweise der Fall wenn das Kabelfahrzeug neben der Kabelanlage landet. Insbesondere zu Beginn und am Ende der Inspektion der Kabelanlage kann das Kabelfahrzeug sicher und stabil auf das mindestens eine Führungselement abgestellt werden.

Das mindestens eine Führungselement kann aber derart ausgebildet sein, dass es frei von einer Funktion als Standbein ist.

Das erfindungsgemässe Verfahren zur Inspektion einer Kabelanlage (wobei die Kabelanlage eine Mehrzahl von in einer gemeinsamen Richtung zwischen Masten verlaufenden Kabeln aufweist) mit einem oben beschriebenen Kabelfahrzeug umfassend folgende Schritte:
- Fliegen des Kabelfahrzeugs auf einen ersten zusammenhängenden und durch den Kabelfahrmechanismus befahrbaren Abschnitt des mindestens einen Kabels der Kabelanlage,
- Inspektion der Kabelanlage des ersten Abschnitts des mindestens einen Kabels der Kabelanlage während des Fahrens auf diesem ersten Abschnitt,
- Fliegen des Kabelfahrzeugs auf einen zweiten zusammenhängenden und durch den Kabelfahrmechanismus befahrbaren Abschnitt des mindestens einen Kabels der Kabelanlage, welcher vom ersten Abschnitt verschieden ist,
- Inspektion der Kabelanlage des zweiten Abschnitts des mindestens einen Kabels der Kabelanlage während des Fahrens auf diesem zweiten Abschnitt.

Dieses Verfahren hat den Vorteil, dass die Inspektion der Kabelanlage während des Fahrens stattfindet und daher energieeffizient erfolgt. Dabei können aber gleichzeitig Hindernisse über- und/oder umflogen werden, was die Inspektion vereinfacht und beschleunigt. Nach dem Fliegen landet das Kabelfahrzeug auf dem nächsten befahrbaren Abschnitt der Kabelanlage und setzt die Inspektion während des Fahrens fort.

Im Verfahren fliegt das Kabelfahrzeug nur wo nötig, also um Hindernisse herum und/oder beispielsweise auch auf die Kabelanlage bzw. davon wieder herunter. Ein grosser Teil der Inspektion erfolgt energieeffizient durch Fahren. Dieses Verfahren zur Inspektion der Kabelanlage spart Zeit, Energie und Geld.

Optional ist im oben genannten Verfahren der erste Abschnitt des mindestens einen Kabels der Kabelanlage in Fahrtrichtung des Kabelfahrzeugs bei der Inspektion vor einem Mast der Kabelanlage angeordnet, und der zweite Abschnitt ist hinter dem Mast angeordnet.

Anders ausgedrückt betrifft das Verfahren in diesem Fall ein Um- und/oder Überfliegen eines Mastes der Kabelanlage.

Die oben beschriebenen optionalen Merkmale und/oder Alternativen sowohl der Vorrichtung als auch des Verfahrens sind untereinander kombinierbar, sofern sie sich nicht gegenseitig ausschliessen.

Im Folgenden wird der Erfindungsgegenstand anhand eines bevorzugten Ausführungsbeispiels, welches in den beiliegenden Zeichnungen schematisch dargestellt ist, näher erläutert. Es zeigen:
- Figur 1: eine perspektivische Ansicht eines Kabelfahrzeugs in Fahrposition auf einem Kabel der Kabelanlage;
- Figur 2: dasselbe wie in Figur 1, wobei das Kabel eine Neigung gegenüber einer Horizontalen aufweist;
- Figur 3: eine Seitenansicht einer Kabelanlage mit einem Kabelfahrzeug in Fahrposition auf einem Kabel der Kabelanlage;
- Figur 4: eine Schnittansicht durch Figur 3 durch die Ebene A-A;
- Figur 5: eine schematische Übersicht über die von einer ersten Kamera und einem Distanzmesser inspizierten Teile aus Figur 4;
- Figur 6: eine Ansicht eines kleinen Ausschnitts aus Figur 1 von hinten und in Fahrtrichtung betrachtet.

Grundsätzlich sind in den Figuren gleiche Teile mit gleichen Bezugszeichen versehen.

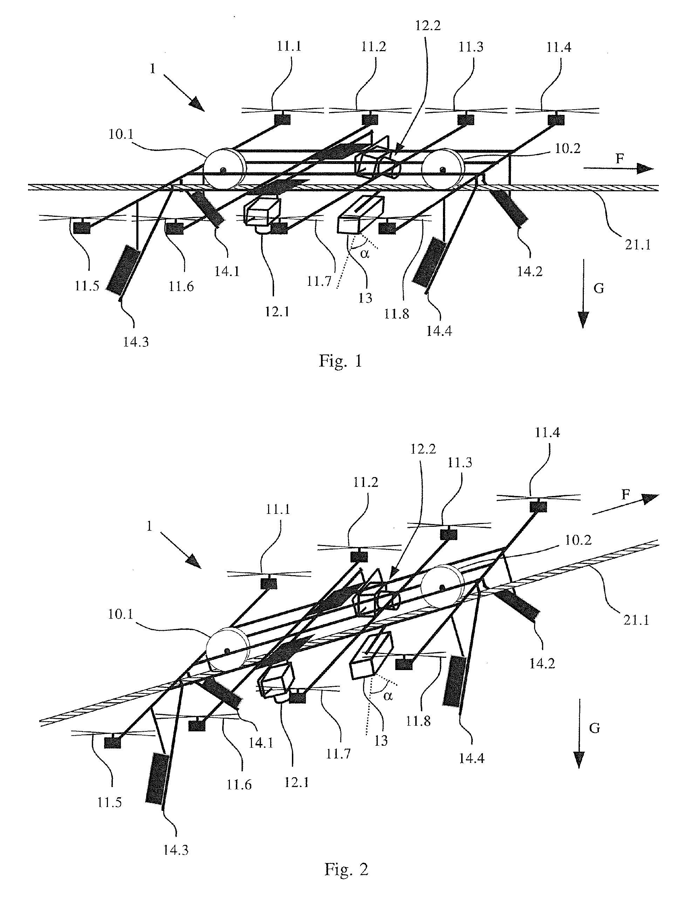

Figur 1 zeigt eine perspektivische Ansicht eines Kabelfahrzeugs 1 in Fahrposition auf einem Kabel 21.1 einer Kabelanlage 20. Das Kabelfahrzeug 1 umfasst einen Kabelfahrmechanismus, einen Flugmechanismus, eine Inspektionsvorrichtung, eine Kabellandesteuerung und einen Ausrichtungsmechanismus. Zur einfachen Darstellung und zur Erleichterung des Verständnisses sind nicht alle Komponenten bzw. alle Teile aller Komponenten des Kabelfahrzeugs 1 in der schematischen Figur 1 dargestellt.

Die Gravitationsrichtung G weist in Richtung des entsprechend eingezeichneten Pfeils. Eine Fahrtrichtung F des Kabelfahrzeugs 1, welches sich in Fahrposition auf dem Kabel 21.1 befindet, ist ebenfalls durch einen Pfeil eingezeichnet. Wenn sich das Kabelfahrzeug 1 neben der Fahrposition befindet und sich daher das Kabel 21.1 nicht unter den Rollen 10.1, 10.2 befindet, gelten alle Aussagen bezüglich einer Lage des Kabels 21.1 auch für eine gedachte Linie, welche im Fall der Fahrposition der Lage des Kabels 21.1 entspricht.

Der Kabelfahrmechanismus umfasst eine erste Rolle 10.1 und eine zweite Rolle 10.2, wobei die zweite Rolle 10.2 elektrisch angetrieben ist. Der nicht in Figur 1 dargestellte elektrische Antrieb der zweiten Rolle 10.2 ist ebenfalls vom Kabelfahrmechanismus umfasst. Beide Rollen 10.1, 10.2 sind in Fahrposition des Kabelfahrzeugs 1 hintereinander auf demselben Kabel 21.1 angeordnet. Die beiden Rollen 10.1, 10.2 sind jeweils an einander entgegen gesetzten Enden des Kabelfahrmechanismus angeordnet. Auf diese Weise sind Achsen der beiden Rollen 10.1, 10.2 voneinander beabstandet, was eine hohe Stabilität des Kabelfahrzeugs 1 in Fahrposition gewährleistet. Der Abstand der Achsen beträgt 107 cm. Die Achsen der Rollen 10.1, 10.2 sind an einem Grundkörper des Kabelfahrzeugs 1 befestigt. Die Rollen 10.1, 10.2 liegen in Fahrposition in Schwerkraftrichtung G auf dem Kabel 21.1 auf, liegen also oben auf dem Kabel 21.1 auf. Beide Rollen 10.1, 10.2 weisen denselben Durchmesser von 13 cm auf.

Der Flugmechanismus umfasst acht Rotoren 11.1-11.8, welche Teile eines Multikopters sind. Die Rotoren 11.1-11.8 weisen jeweils einen Durchmesser von 33 cm auf. Die Rotoren 11.1-11.8 weisen parallel zueinander liegende Rotationsachsen auf. Die Rotationsachsen der Rotoren 11.1-11.8 des Multikopters weisen im Wesentlichen in eine Funktionsrichtung des Multikopters. "Im Wesentlichen" bedeutet für den Fall der Funktionsrichtung des Multikopters, dass gemäss einer üblichen Funktionsweise von Multikoptern abhängig von einem Steuerbefehl und einer ausgewählten Flugrichtung für den Multikopter die Funktionsrichtung leicht von der Richtung der Rotationsachsen der Rotoren 11.1-11.8 abweichen kann.

In Funktionsrichtung des Flugmechanismus betrachtet sind in Fahrposition des Kabelfahrzeugs 1 vier Rotoren 11.1-11.4 auf einer Seite des Kabels 21.1 angeordnet und vier weitere Rotoren 11.5-11.8 auf einer zweiten, von der ersten verschiedenen Seite des Kabels 21.1 angeordnet. Die Rotationsachsen der Rotoren 11.1-11.8 sind auf beiden Seiten des Kabels 21.1 jeweils in einer Rotorachsenebene angeordnet. Die Rotorachsenebenen verlaufen parallel zu einer Ebene, welche kreisrunde Querschnitte von Laufflächen der Rollen 10.1, 10.2 umfasst. Die kreisrunden Querschnitte bezeichnen dabei jeweils einen Teil eines Aussenumfangs einer Rolle 10.1, 10.2, welcher bei einer in Fahrposition auf dem Kabel 21.1 durchdrehenden Rolle 10.1, 10.2 mit stets demselben Punkt des Kabels 21.1 in Kontakt treten würde. Die Rotationsachsen der Rotoren 11.1-11.8 sind durch Streben am Grundkörper des Kabelfahrzeugs 1 befestigt.

Der Multikopter wird elektrisch angetrieben, wobei jeder der acht Rotoren 11.1-11.8 über einen eigenen elektrischen Motor verfügt. Der elektrische Antrieb des Fahrmechanismus und der elektrische Antrieb des Flugmechanismus speisen sich aus verschiedenen Quellen, welche vom Kabelfahrzeug umfasst sind. Die elektrischen Energiequellen umfassen je einen oder mehrere rasch austauschbaren, aufladbaren elektrischen Speicher (Akku oder Akkupack), könnte aber beispielsweise auch Batterien oder Kondensatoren umfassen.

Der Ausrichtungsmechanismus umfasst eine (nicht in den Figuren dargestellte) Neigungsmechanik, welche zwischen den Rotationsachsen der Rotoren 11.1-11.8 und den sie mit dem Grundkörper verbindenden Streben angeordnet ist. Die Neigungsmechanik ist durch einen separaten elektrischen Antrieb angetrieben. Die Neigungsmechanik kann die Funktionsrichtung des Multikopters, welche im Wesentlichen parallel zu den Rotationsachsen der Rotoren 11.1-11.8 verläuft (bzw. umgekehrt), in einem Neigungswinkel relativ zum Kabelfahrmechanismus anordnen. Die Rotationsachsen der Rotoren 11.1-11.8 sind bei nicht ausgelenktem Neigungsmechanismus (also in einer Ausgangsposition, d.h. ohne Neigung des Neigungsmechanismus) senkrecht zu einer Verbindungsgeraden von Kontaktpunkten der beiden Rollen 10.1, 10.2 mit dem Kabel 21.1 ausgerichtet.

Der Neigungsmechanismus ermöglicht den Rotationsachsen der Rotoren 11.1-11.8 eine Drehung in der Rotorachsenebene. Die Rotationsachsen der Rotoren 11.1-11.8 können alle gleichzeitig und unter Beibehaltung Ihrer Parallelität in der Rotorachsenebene relativ zur Ausgangsposition um einen Neigungswinkel bis maximal 30 Grad in beide Richtungen gedreht bzw. geneigt werden. Der Neigungswinkel ist stufenlos einstellbar. Durch den Ausrichtungsmechanismus kann das Kabelfahrzeug 1 auf Abschnitten des Kabels 21.1 senkrecht landen (und auch senkrecht starten), welche horizontal verlaufen oder mit in einer zur Horizontalen geneigten Richtung verlaufen.

Figur 2 zeigt dasselbe wie Figur 1, wobei das Kabel 21.1 in Figur 2 im Gegensatz zur Figur 1 eine Neigung gegenüber der Horizontalen aufweist. Der Ausrichtungsmechanismus kompensiert die Neigung des Kabels 21.1 bezüglich der Vertikalen, wodurch die Rotationsachsen der Rotoren 11.1-11.8 in der Rotorachsenebene vertikal angeordnet sind und die Funktionsrichtung des Flugmechanismus entgegen der Gravitationsrichtung G zeigt.

Das Kabelfahrzeug 1 weist die Inspektionsvorrichtung auf, welche wiederum eine erste Kamera 12.1, eine zweite Kamera 12.2 und einen Distanzmesser 13 umfasst. Die erste Kamera 12.1 ist mit einem Weitwinkelobjektiv mit einem Öffnungswinkel von 100 Grad ausgerüstet. Die erste Kamera 12.1 ist derart am Grundkörper des Kabelfahrzeugs 1 befestigt, dass sie Bilder von mehreren Kabeln der Kabelanlage 20 gleichzeitig erfasst. Dazu ist der Öffnungswinkel der ersten Kamera 12.1 in der Fahrposition des Kabelfahrzeugs im Wesentlichen nach unten gerichtet. Durch eine an die zu inspizierende Kabelanlage 20 und deren vorgegebene räumliche Position der Kabel angepasste Positionierung und Ausrichtung der ersten Kamera 12.1 kann sichergestellt werden, dass die mehreren von der ersten Kamera 12.1 gleichzeitig erfassten Kabel sich im auszuwertenden Bildausschnitt nicht überlappen.

Die erste Kamera 12.1 kann funkferngesteuert bewegt und ausgerichtet werden. Die von der ersten Kamera 12.1 erfassten Bilder werden an einen Empfänger gesendet, welcher der Fachkraft zur Verfügung steht, die die erste Kamera 12.1 und/oder das Kabelfahrzeug 1 funkfernsteuert.

Die zweite Kamera 12.2 ist ebenfalls mit einem Weitwinkelobjektiv mit einem Öffnungswinkel von 100 Grad ausgerüstet. Die zweite Kamera 12.2 ist derart am Grundkörper des Kabelfahrzeugs 1 befestigt, dass sie Bilder von Masten der Kabelanlage 20 erfasst. Dazu ist der Öffnungswinkel der zweiten Kamera 12.2 in der Fahrposition des Kabelfahrzeugs in Fahrtrichtung F geneigt. Genauer gesagt ist der Öffnungswinkel der zweiten Kamera 12.2 dabei in einem nach unten geneigten spitzen Winkel zur Fahrtrichtung F ausgerichtet.

Der Distanzmesser 13 misst Distanzen basierend auf vom Distanzmesser 13 emittierten Laserstrahlen, welche von Gegenständen reflektiert wieder vom Distanzmesser erfasst werden. Der Distanzmesser 13 misst Distanzen von Gegenständen innerhalb eines Inspektionsbereichs, welcher durch einen Öffnungswinkel α beschränkt ist. Der Distanzmesser 13 misst Distanzen von 1 Meter bis 80 Meter, und der Öffnungswinkels α beträgt 90 Grad. Ein Scheitelpunkt des Öffnungswinkels α liegt dabei im Distanzmesser 13, und der Öffnungswinkel α ist symmetrisch zu einer Mittelebene zwischen den beiden Rotorachsenebenen. Der Distanzmesser 13 ist derart am Grundkörper des Kabelfahrzeugs 1 befestigt und ausgerichtet, dass der Öffnungswinkel α in Fahrposition im Wesentlichen nach unten gerichtet ist.

Erfasste Daten sowohl der ersten Kamera 12.1, der zweiten Kamera 12.2 als auch des Distanzmessers 13 werden im Kabelfahrzeug 1 als Rohdaten und als komprimierte Bilddateien (z.B. als jpg-Bilder) gespeichert.

Das Kabelfahrzeug 1 wird durch handelsübliche Funkfernsteuerungen ferngesteuert. Die beiden Kameras 12.1, 12.2 werden ebenfalls durch eine handelsübliche Funkfernsteuerung ferngesteuert. Zudem verfügt das Kabelfahrzeug 1 über eine Kabellandesteuerung, durch welche das Kabelfahrzeug 1 automatisch auf dem Kabel 21.1 landen kann. Die Kabellandesteuerung umfasst spezifische Näherungssensoren zur automatischen Steuerung der Landung auf dem Kabel 21.1.

Das Kabelfahrzeug 1 umfasst zudem vier Führungselemente 14.1-14.4, welche paarweise zwei V-förmige Strukturen ausbilden. Diese beiden V-förmigen Strukturen spitzen sich in Richtung des Kabels 21.1 in Fahrposition zu. Die V-förmigen Strukturen dienen dazu, das Kabel 21.1 bei der Landung in Fahrposition in Richtung der Rollen 10.1, 10.2 zu führen. Zudem dienen die Führungselemente 14.1-14.4 als Standbeine für das Kabelfahrzeug 1, wenn es sich nicht in der Fahrposition befindet und auch nicht fliegt. Die Führungselemente 14.1-14.4 sind jeweils an einander entgegen gesetzten Enden des Kabelfahrzeugs 1 angeordnet.

An distalen Enden der Führungselemente 14.1-14.4 sind jeweils austauschbare elektrische Speicher in Form von Akkupacks angeordnet. Da die distalen Enden der Führungselemente 14.1-14.4 in Fahrposition des Kabelfahrzeugs 1 unterhalb des Kabels 21.1 liegen, wirkt ein Gewicht der dort angeordneten elektrischen Speicher stabilisierend auf das Kabelfahrzeug 1 in Fahrposition.

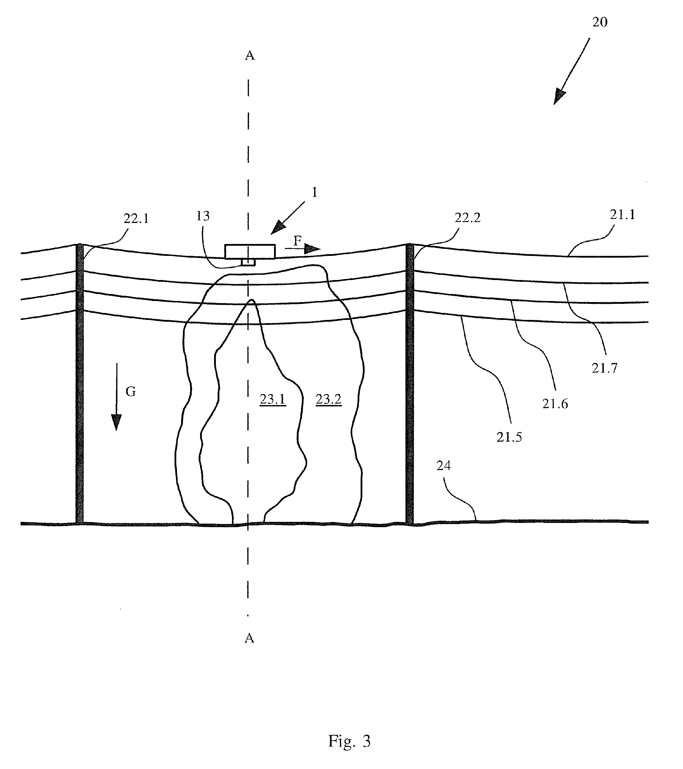

Figur 3 zeigt eine Seitenansicht einer Kabelanlage 20 mit einem Kabelfahrzeug 1 in Fahrposition auf einem am weitesten oben liegenden Kabel 21.1 der Kabelanlage 20. Das am weitesten oben liegende Kabel 21.1 ist bei vielen herkömmlichen Hochspannungsleitungen und auch in Figur 3 als Erdleiter ausgebildet. Die Kabelanlage 20 weist neben dem obersten Kabel 21.1 noch weitere sechs Kabel 21.2-21.7 auf. In Figur 3 sind dabei drei der Kabel 21.2-21.4 durch drei andere Kabel 21.5-21.7 verdeckt. Alle Kabel 21.1-21.7 verlaufen dabei in einer gemeinsamen Richtung zwischen Masten 22.1, 22.2 der Kabelanlage 20.

Das oberste Kabel 21.1 ist einfach anzufliegen und bietet eine gute Übersicht über die Kabelanlage und deren Umgebung. Alle Kabel 21.1-21.7 hängen zwischen den Masten 22.1, 22.2 jeweils durch, d.h. sie weisen abschnittsweise eine Neigung von bis zu 15 Grad gegenüber der Horizontalen auf. An Hanglagen können die Kabel 21.1-21.7 abschnittsweise eine Neigung von bis zu 30 Grad oder sogar mehr aufweisen. Schematisch sind in Figur 3 zudem neben einem Boden 24 noch als Gegenstände der Umgebung zwei Bäume 23.1, 23.2 eingezeichnet. Durch den Distanzmesser 13 des Kabelfahrzeugs 1 verläuft eine Schnittebene A-A, welche quer zu den Kabeln 21.1-21.7 steht und die Bäume 23.1, 23.1 schneidet.

Das Kabelfahrzeug 1 auf dem Kabel 21.1 ist in Figur 3 mittig zwischen den Masten 22.1, 22.2 eingezeichnet. Zwischen den Masten 22.1, 22.2 kann das Kabelfahrzeug 1 zur Inspektion der Kabelanlage 20 fahren. Sobald das Kabelfahrzeug 1 einen vordefinierten Abstand von 100 cm zu einem Hindernis auf dem Kabel 21.1 unterschreitet, indem es sich beispielsweise einer Seilführung, einer Klemme, einer Armatur, einem Seilspanner oder einem die Fahrt des Kabelfahrzeugs 1 behindernden Teil der Masten 22.1, 22.2 nähert, endet das Fahren der Kabelfahrzeugs 1. Das Kabelfahrzeug 1 fliegt unter Nutzung seines Flugmechanismus über das Hindernis bzw. darum herum und landet automatisch wieder auf dem obersten Kabel 21.1 der Kabelanlage 20 und setzt dessen Inspektion während des Fahrens fort.

Während des Fliegens hat die Inspektionsvorrichtung weiterhin Informationen erfasst. Diese Informationen aus Phasen des Fliegens können durch Lage- und Positionssensoren des Kabelfahrzeugs mit Informationen aus Phasen des Fahrens in eine räumliche Verbindung zueinander gebracht werden. Daraus ergibt sich ein Bild der Kabelanlage 20, welches sich sowohl aus Phasen des Fahrens als auch Phasen des Fliegens zusammensetzt.

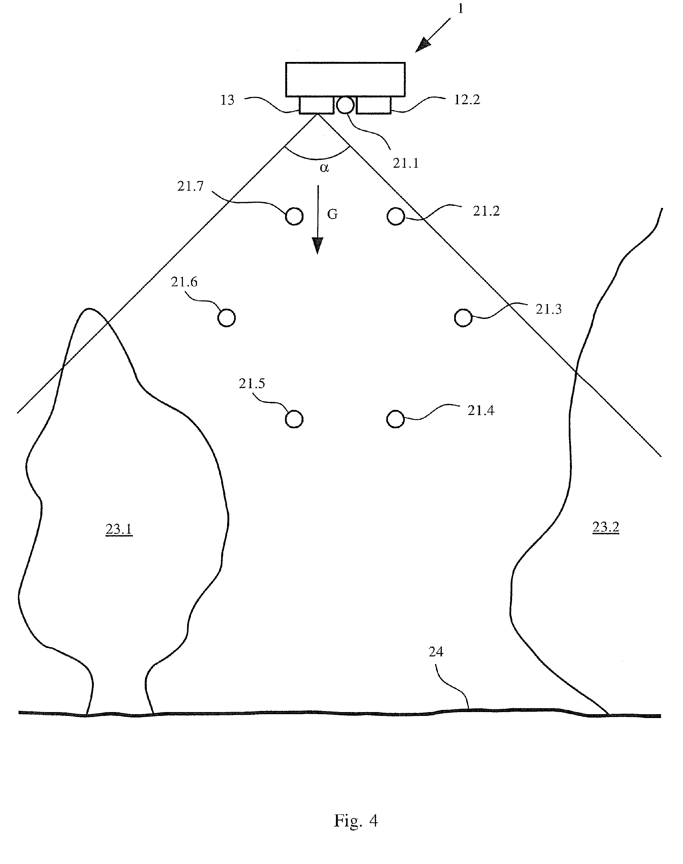

In Figur 4 ist eine Schnittansicht durch Figur 3 durch die Ebene A-A dargestellt. Der Inspektionsbereich des Distanzmessers 13 ist durch den Öffnungswinkel α begrenzt. Der Öffnungswinkel α weist einen Scheitelpunkt im Distanzmesser 13 auf und weist nach unten. Im Öffnungswinkel α liegen alle Kabel 21.2-21.7 mit Ausnahmen des obersten Kabels 21.1, auf welchem das Kabelfahrzeug 1 fährt. Aufgrund von bekannten Dimensionen Kabelfahrzeugs 1 und dessen Lage relativ zum obersten Kabel 21.1 in Fahrposition kann auf eine Lage des obersten Kabels 21.1 geschlossen werden. Somit kann der Distanzmesser 13 Distanzen zu allen sich aus Sicht des Distanzmessers 13 nicht überdeckenden Kabeln der Kabelanlage 20 ermitteln. Der Distanzmesser 13 misst darüber hinaus Teile der Bäume 23.1, 23.2 und des Bodens 24, welche in den Öffnungswinkel α treten. Die nicht dargestellte erste Kamera 12.1 des Kabelfahrzeugs 1 erfasst alle Kabel 21.1-21.7 gleichzeitig in einem Bild. Die nur schematisch angedeutete zweite Kamera 12.2 erfasst die Masten 22.1, 22.2 der Kabelanlage 20.

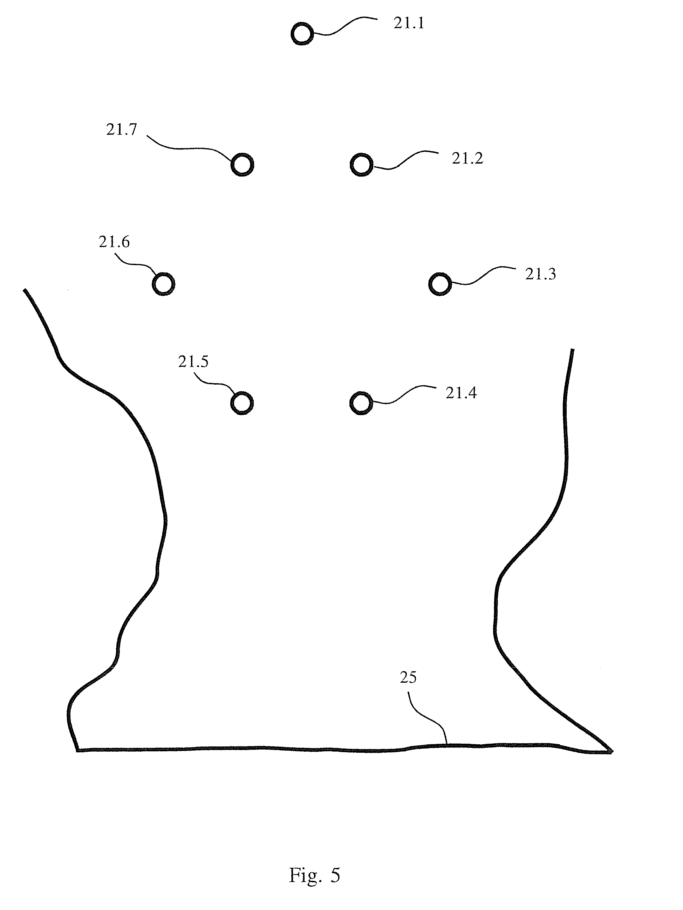

Figur 5 zeigt eine schematische Übersicht über die von der ersten Kamera 12.1 und dem Distanzmesser 13 inspizierten Teile aus Figur 4. Die erste Kamera 12.1 erfasst alle Kabel 21.1-21.7 der Kabelanlage 20 in Bildern. Der Distanzmesser 13 ermittelt Distanzen zu allen Kabeln 21.2-21.7 der Kabelanlage 20 mit Ausnahme des obersten Kabels 21.1, dessen Position aber in der Fahrposition sowieso bekannt ist. Zudem ermittelt der Distanzmesser 13 eine Kontur 25 der Umgebung innerhalb des Öffnungswinkels α. Diese Kontur 25 umfasst Teile des Bodens 24 und der Bäume 23.1, 23.2. Alle vorgenannte Information wird vom Inspektionsbereich der Inspektionsvorrichtung umfasst. Der Inspektionsbereich umfasst im vorliegenden Fall mindestens teilweise sowohl die Sicherheitsumgebung als auch die erweiterte Sicherheitsumgebung der Kabelanlage 20. Die von der zweiten Kamera 12.2 inspizierten Masten 22.1, 22.2 der Kabelanlage 20 sind in Figur 5 nicht dargestellt.

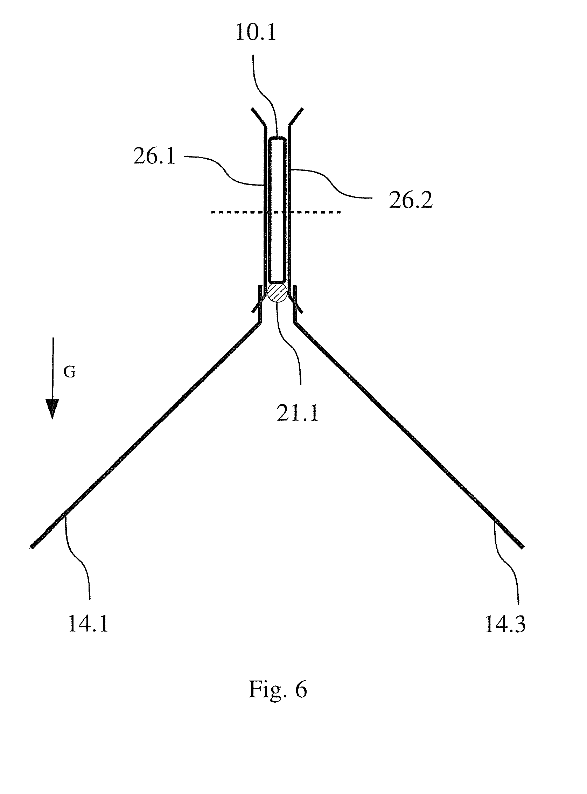

Figur 6 zeigt eine Ansicht eines kleinen Ausschnitts aus Figur 1 von hinten und in Fahrtrichtung betrachtet. In diesem kleinen Ausschnitt sind die Rolle 10.1, ein Querschnitt des Kabels 21.1 und zwei Führungselemente 14.1 und 14.3 dargestellt. Viele Details sind in dieser schematischen Figur 6 nicht dargestellt, beispielsweise die Akkupacks an den distalen Enden der Führungselemente 14.1 und 14.3. Figur 6 dient dazu, eine Anordnung und Funktion von in den anderen Figuren nicht gezeigten Randscheiben 26.1 und 26.2 darzustellen.

Die Randscheiben 26.1 und 26.2 sind derart ausgebildet und beidseitig der Rolle 10.1 derart angeordnet, dass sie radial über eine stirnseitige Lauffläche der Rolle 10.1 hinausragen. Dabei erstrecken sich die über die Lauffläche der Rolle 10.1 hinausragenden Ränder der Randscheiben 26.1 und 26.2 über eine kurze Strecke (in der Grössenordnung eines Querschnitts des Kabels 21.1) gerade und in radialer Richtung. Nach dieser kurzen geraden Strecke sind die Ränder der Randscheiben 26.1 und 26.2 leicht angewinkelt und zeigen von der Rolle 10.1 und deren stirnseitiger Lauffläche weg, so dass sich die Randscheiben 26.1 und 26.2 an ihren distalen Enden voneinander entfernen. Die Randscheiben 26.1 und 26.2 sind an der Rolle 10.1 rotationsfest befestigt, wodurch sich die Randscheiben 26.1 und 26.2 sowie die Rolle 10.1 immer gemeinsam um dieselbe Rotationsachse drehen. Diese Form der Randscheiben 26.1 und 26.2 und deren Befestigung an der Rolle 10.1 erfüllen eine ähnliche Funktion wie eine konvexe Form der stirnseitigen Lauffläche, nämlich ein Verhindern eines Wegrutschens des Kabels 21.1 in Richtung der Rotationsachse der Rolle 10.1.

In Figur 6 ist zudem ersichtlich, dass sich die Führungselemente 14.1, 14.3 mit den Randscheiben 26.1, 26.2 derart überlappen, dass das Kabel 21.1 hinsichtlich der Rolle 10.1 sicher geführt ist und bei einem Herausspringen aus der Rolle 10.1 (und deren Randscheiben 26.1, 26.2) wieder dahin zurück geführt werden kann.

Durch Auswertung der Informationen aus der Inspektionsvorrichtung kann beurteilt werden, ob die Sicherheitsumgebung und/oder die erweiterte Sicherheitsumgebung frei von Gegenständen ist.

## Patentansprüche

1. Kabelfahrzeug (1) zur Inspektion von Kabelanlagen (20), welche eine Mehrzahl von in einer gemeinsamen Richtung zwischen Masten (22.1, 22.2) verlaufenden Kabeln (21.1-21.7) aufweisen, umfassend
- einen Kabelfahrmechanismus zum angetriebenen Fahren des Kabelfahrzeugs (1) auf mindestens einem Kabel (21.1-21.7) der Kabelanlage (20),
- einen Flugmechanismus zum Fliegen des Kabelfahrzeugs (1) und
- eine Inspektionsvorrichtung zur Inspektion der Kabelanlage (20),
**dadurch gekennzeichnet, dass**
- der Flugmechanismus derart ausgerüstet ist, dass das Kabelfahrzeug (1) durch Fliegen auf das mindestens eine Kabel (21.1-21.7) der Kabelanlage (20) positionierbar ist,
- die Inspektionsvorrichtung zur gleichzeitigen Inspektion mehrerer voneinander beabstandeter Kabel (21.1-21.7) der Kabelanlage (20) während des angetriebenen Fahrens auf dem mindestens einen Kabel (21.1-21.7) ausgerüstet ist.

2. Kabelfahrzeug (1) gemäss Anspruch 1, **dadurch gekennzeichnet, dass** der Kabelfahrmechanismus zum angetriebenen Fahren des Kabelfahrzeugs (1) auf genau einem Kabel (21.1-21.7) der Kabelanlage (20) ausgerüstet ist.

3. Kabelfahrzeug (1) gemäss Anspruch 1 oder 2, **dadurch gekennzeichnet, dass** die Inspektionsvorrichtung zur Inspektion einer Sicherheitsumgebung der Kabelanlage (20) ausgerüstet ist.

4. Kabelfahrzeug (1) gemäss einem der Ansprüche 1 bis 3, **dadurch gekennzeichnet, dass** die Inspektionsvorrichtung zur Inspektion eines Inspektionsbereichs ausgerüstet ist, wobei der Inspektionsbereich durch einen Öffnungswinkel α von maximal 360 Grad, insbesondere von maximal 180 Grad und insbesondere von maximal 90 Grad begrenzt ist und der Öffnungswinkel α einen Scheitelpunkt in der Inspektionsvorrichtung aufweist.

5. Kabelfahrzeug (1) gemäss einem der Ansprüche 1 bis 4, **dadurch gekennzeichnet, dass** der Flugmechanismus eine Kabellandesteuerung umfasst, welche zum automatischen Landen des Kabelfahrzeugs (1) auf dem mindestens einen Kabel (21.1-21.7) der Kabelanlage (20) ausgerüstet ist.

6. Kabelfahrzeug (1) gemäss einem der Ansprüche 1 bis 5, **dadurch gekennzeichnet, dass** der Flugmechanismus einen Multikopter umfasst.

7. Kabelfahrzeug (1) gemäss einem der Ansprüche 1 bis 6, **dadurch gekennzeichnet, dass** der Kabelfahrmechanismus einen elektrischen Antrieb umfasst.

8. Kabelfahrzeug (1) gemäss einem der Ansprüche 1 bis 7, **dadurch gekennzeichnet, dass** der Kabelfahrmechanismus zwei oder mehr Rollen (10.1, 10.2) aufweist, wobei mindestens eine Rolle (10.1, 10.2) angetrieben ist.

9. Kabelfahrzeug (1) gemäss Anspruch 8, **dadurch gekennzeichnet, dass** das Kabelfahrzeug (1) einen Ausrichtungsmechanismus aufweist, welcher dazu ausgerüstet ist, die zwei oder mehr Rollen (10.1, 10.2) des Kabelfahrmechanismus in einer Position mit einer Neigung relativ zu einer Referenzebene anzuordnen, wobei eine Funktionsrichtung des Flugmechanismus senkrecht zur Referenzebene verläuft.

10. Kabelfahrzeug (1) gemäss Anspruch 9, **dadurch gekennzeichnet, dass** der Ausrichtungsmechanismus dazu ausgerüstet ist, die zwei oder mehr Rollen (10.1, 10.2) des Kabelfahrmechanismus in einer Position mit einer Neigung in einem Bereich von -30 Grad bis 30 Grad relativ zur Referenzebene anzuordnen.

11. Kabelfahrzeug (1) gemäss einem der Ansprüche 1 bis 10, **dadurch gekennzeichnet, dass** die Inspektionsvorrichtung eine Kamera (12.1) umfasst, welche zu einem Erstellen eines Bildes mit mehreren voneinander beabstandeten Kabeln (21.1-21.7) der Kabelanlage (20) ausgerüstet ist.

12. Kabelfahrzeug (1) gemäss einem der Ansprüche 1 bis 11, **dadurch gekennzeichnet, dass** die Inspektionsvorrichtung einen Distanzmesser (13) umfasst, welcher dazu ausgerüstet ist, Distanzen mit Laserstrahlen zu messen und insbesondere Distanzen in der Sicherheitsumgebung und/oder im Inspektionsbereich zu messen.

13. Kabelfahrzeug (1) gemäss einem der Ansprüche 1 bis 12, **dadurch gekennzeichnet, dass** das Kabelfahrzeug (1) mindestens ein Führungselement (14.1-14.4) aufweist, welches dazu ausgerüstet ist, den Kabelfahrmechanismus relativ zum mindestens einen Kabel (21.1-21.7) der Kabelanlage (20) zu führen und insbesondere dazu ausgerüstet ist, das mindestens eine Kabel (21.1-21.7) bei einem Herausspringen aus dem Kabelfahrmechanismus während des Fahrens wieder dahin zurückzuführen.

14. Kabelfahrzeug (1) gemäss Anspruch 13, **dadurch gekennzeichnet, dass** das mindestens eine Führungselement (14.1-14.4) als Standbein des Kabelfahrzeugs (1) ausgebildet ist, für den Fall dass das Kabelfahrzeug (1) abseits des mindestens einen Kabels (21.1-21.7) der Kabelanlage (20) aufsetzt.

15. Verfahren zur Inspektion einer Kabelanlage (20), welche eine Mehrzahl von in einer gemeinsamen Richtung zwischen Masten (22.1, 22.2) verlaufenden Kabeln (21.1-21.7) aufweist, mit einem Kabelfahrzeug (1) gemäss einem der Ansprüche 1 bis 13, umfassend folgende Schritte:
- Fliegen des Kabelfahrzeugs (1) auf einen ersten zusammenhängenden und durch den Kabelfahrmechanismus befahrbaren Abschnitt des mindestens einen Kabels (21.1-21.7) der Kabelanlage (20),
- Inspektion der Kabelanlage (20) des ersten Abschnitts des mindestens einen Kabels (21.1-21.7) der Kabelanlage (20) während des Fahrens auf diesem ersten Abschnitt,
- Fliegen des Kabelfahrzeugs (1) auf einen zweiten zusammenhängenden und durch den Kabelfahrmechanismus befahrbaren Abschnitt des mindestens einen Kabels (21.1-21.7) der Kabelanlage (20), welcher vom ersten Abschnitt verschieden ist,
- Inspektion der Kabelanlage (20) des zweiten Abschnitts des mindestens einen Kabels (21.1-21.7) der Kabelanlage (20) während des Fahrens auf diesem zweiten Abschnitt.
